# EUROPEAN PATENT APPLICATION

(11) **EP 4 726 923 A1**
(43) Date of publication of application: **15.04.2026**
(21) Application number: 24854339.9
(22) Date of filing: 25.07.2024
(51) Int. Cl.: H01Q 5/307, H01Q 1/24, H04M 1/02, H01Q 5/30

(54) **ELECTRONIC DEVICE**

(30) Priority: 14.08.2023 KR 20230106187; 20.09.2023 KR 20230125175
(71) Applicant: Samsung Electronics Co., Ltd., Suwon-si, Gyeonggi-do 16677 (KR)
(72) Inventor: KIM, Sunglak, Suwon-si, Gyeonggi-do 16677 (KR); KIM, Namwoo, Suwon-si, Gyeonggi-do 16677 (KR); KIM, Byoungjun, Suwon-si, Gyeonggi-do 16677 (KR); KIM, Hyunmuk, Suwon-si, Gyeonggi-do 16677 (KR); RYU, Jooyeol, Suwon-si, Gyeonggi-do 16677 (KR); YOON, Shinhyuk, Suwon-si, Gyeonggi-do 16677 (KR); JANG, Gyudae, Suwon-si, Gyeonggi-do 16677 (KR); JUN, Jaeyoung, Suwon-si, Gyeonggi-do 16677 (KR); CHOI, Jinwook, Suwon-si, Gyeonggi-do 16677 (KR); YOON, Byounguk, Suwon-si, Gyeonggi-do 16677 (KR)
(74) Representative: Nederlandsch Octrooibureau
(86) International application number: PCT/KR2024/010806
(87) International publication number: WO 2025/037787

(57) **Abstract**

This electronic device comprises: a multi-foldable housing including a first housing, a second housing and a third housing; a first conductive portion for forming a first side surface of the multi-foldable housing; a second conductive portion for forming a second side surface of the multi-foldable housing; a first hinge for rotatably connecting the first housing and the second housing; a second hinge for rotatably connecting the first housing and the third housing; a flexible display supported by the first housing, the second housing and the third housing; a first sensor for sensing a first angle between the first housing and the second housing; and a second sensor for sensing a second angle between the first housing and the third housing, wherein the first conductive portion and the second conductive portion can be activated on the basis of the first angle sensed by the first sensor and the second angle sensed by the second sensor.

## Description

### [Technical Field]

Various embodiments of the disclosure relate to an electronic device, e.g., an electronic device including an antenna.

### [Background Art]

Advancing information communication and semiconductor technologies accelerate the spread and use of various electronic devices. In particular, recent electronic devices are being developed to carry out communication while carried on.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images. As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function, such as for mobile banking, and a scheduling or e-wallet function. These electronic devices have been downsized to be conveniently carried by users.

### [Detailed Description of the Invention]

### [Technical Solution]

According to an embodiment of the disclosure, an electronic device may include a multi foldable housing comprising a first housing, a second housing rotatably connected to the first housing, and a third housing rotatably connected to the first housing, a first conductive portion forming a first side surface of the multi foldable housing, a second conductive portion forming a second side surface opposite to the first side surface of the multi foldable housing, a first hinge rotatably connecting the first housing and the second housing, a second hinge rotatably connecting the first housing and the third housing, a flexible display supported by the first housing, the second housing, and the third housing, a first sensor for sensing a first angle between the first housing and the second housing, and a second sensor for sensing a second angle between the first housing and the third housing. The first conductive portion or the second conductive portion may be activated based on the first angle sensed by the first sensor and the second angle sensed by the second sensor.

According to an embodiment of the disclosure, an electronic device may include a processor, a first housing including a first side portion and a second side portion opposite to the first side portion, a first hinge coupled to the first side portion of the first housing, a second hinge coupled to the second side portion of the first housing, a second housing rotatably coupled to the first hinge and including a first conductive portion rotated about the first hinge, a third housing rotatably coupled to the second hinge and including a second conductive portion rotated about the second hinge, and a switch electrically connected to the processor and selectively connected to the first conductive portion or the second conductive portion. The switch may be connected to the second conductive portion when the first conductive portion faces the third housing.

According to an embodiment of the disclosure, an electronic device may include a first housing including a first side portion and a second side portion opposite to the first side portion, a first hinge coupled to the first side portion of the first housing, a second hinge coupled to the second side portion of the first housing, a second housing rotatably coupled to the first hinge and including a first conductive portion rotated about the first hinge, and a third housing rotatably coupled to the second hinge and including a second conductive portion rotated about the second hinge. When an angle formed by the first housing and the second housing is less than a first reference value, current supply to the first conductive portion may be blocked and a current may be supplied to the second conductive portion.

### [Brief Description of Drawings]

FIG. 1 is a block diagram illustrating an electronic device in a network environment according to an embodiment.
FIG. 2 is a perspective view illustrating an unfolded state of an electronic device according to an embodiment of the disclosure.
FIG. 3 is a perspective view illustrating an unfolded state of an electronic device according to an embodiment of the disclosure.
FIG. 4 is a perspective view illustrating a folded state of an electronic device according to an embodiment of the disclosure.
FIG. 5A is a side view illustrating a folded state of an electronic device according to an embodiment of the disclosure.
FIG. 5B is a side view illustrating a folded state of an electronic device according to an embodiment of the disclosure.
FIG. 5C is a side view illustrating a folded state of an electronic device according to an embodiment of the disclosure.
FIG. 6 is an exploded perspective view illustrating a portion of an electronic device according to an embodiment of the disclosure.
FIG. 7 is a front view illustrating an unfolded state of an electronic device according to an embodiment of the disclosure.
FIG. 8 is a rear view illustrating an unfolded state of an electronic device according to an embodiment of the disclosure.
FIG. 9 is a conceptual view illustrating an antenna of an electronic device according to an embodiment of the disclosure.
FIG. 10 is a view illustrating operation of an antenna according to an embodiment of the disclosure.
FIG. 11 is a perspective view illustrating an electronic device according to an embodiment of the disclosure.
FIG. 12A is a view illustrating an electronic device according to an embodiment of the disclosure.
FIG. 12B is a view conceptually illustrating the electronic device illustrated in FIG. 12A.
FIG. 13A is a view illustrating an electronic device according to an embodiment of the disclosure.
FIG. 13B is a view conceptually illustrating the electronic device illustrated in FIG. 13A.
FIG. 14A is a view illustrating an electronic device according to an embodiment of the disclosure.
FIG. 14B is a view conceptually illustrating the electronic device illustrated in FIG. 14A.
FIG. 15A is a view illustrating an electronic device according to an embodiment of the disclosure.
FIG. 15B is a view conceptually illustrating the electronic device illustrated in FIG. 15A.
FIG. 16 is a control block diagram illustrating an electronic device according to an embodiment of the disclosure.
FIG. 17A is a graph illustrating effects of an electronic device according to an embodiment of the disclosure.
FIG. 17B is a graph illustrating effects of an electronic device according to an embodiment of the disclosure.
FIG. 17C is a graph illustrating effects of an electronic device according to an embodiment of the disclosure.
FIG. 18 is a view illustrating various states of an electronic device according to an embodiment of the disclosure.

### [Mode for Carrying out the Invention]

The following description taken in conjunction with the accompanying drawings may provide an understanding of various exemplary implementations of the disclosure, including claims and their equivalents. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope and spirit of the disclosure. Further, descriptions of well-known functions and configurations may be omitted for clarity and brevity.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

The singular forms "a," "an," and "the" are intended to include the plural forms as well, unless the context clearly indicates otherwise. Thus, as an example, "a component surface" may be interpreted as including one or more of the surfaces of a component.

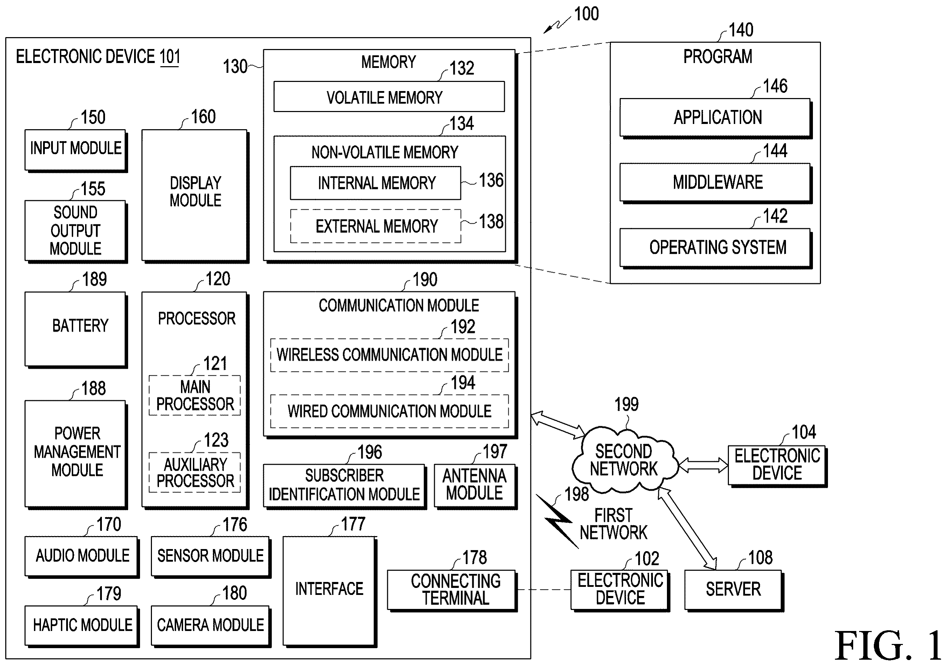

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the components may be omitted from the electronic device 101, or one or more other components may be added in the electronic device 101. In some embodiments, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in nonvolatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the sub processor 123, the sub processor 123 may be configured to use lower power than the main processor 121 or to be specified for a designated function. The sub processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the nonvolatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

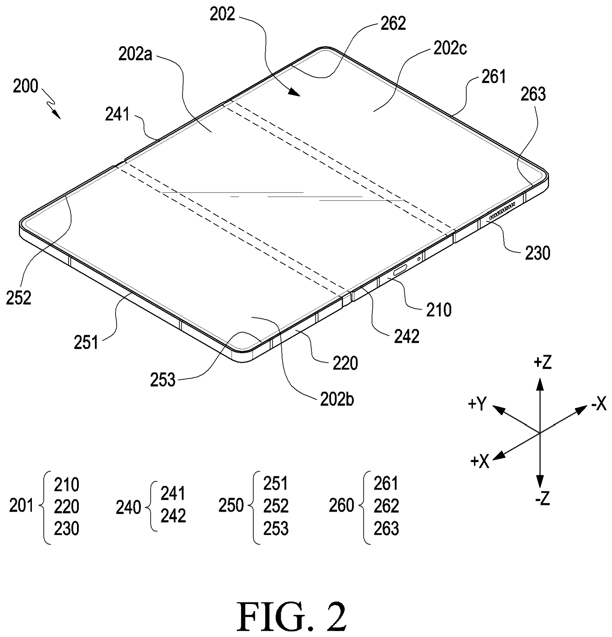

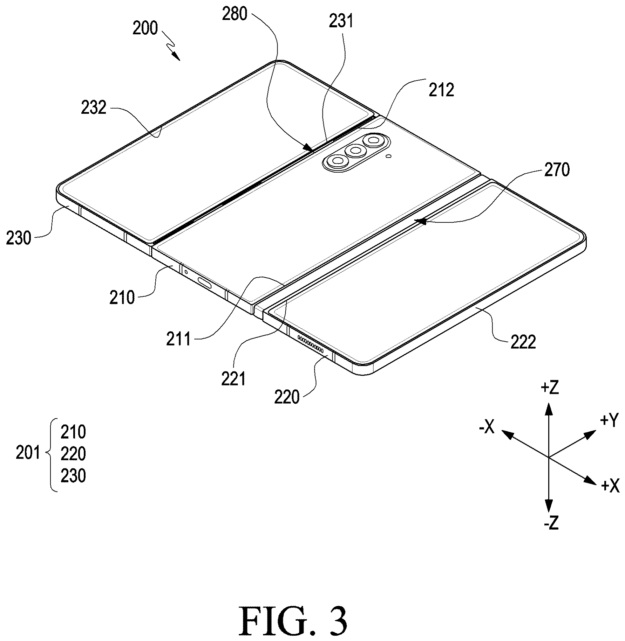

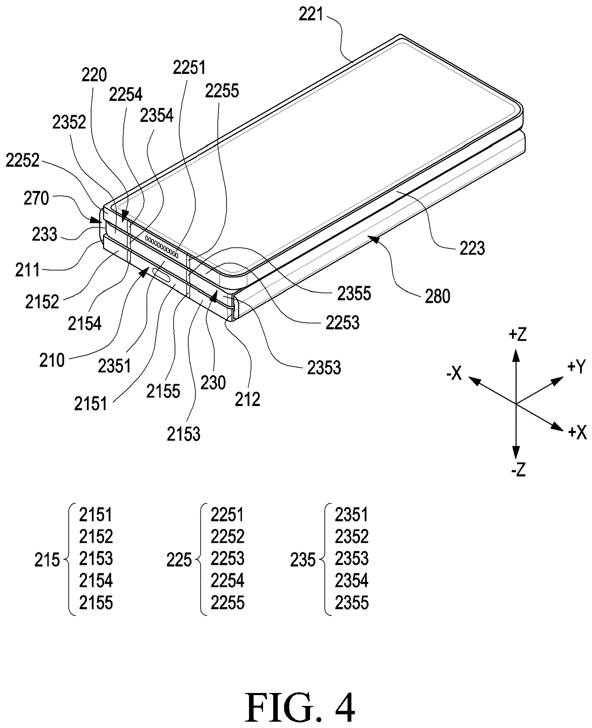

FIG. 2 is a perspective view illustrating an unfolded state of an electronic device 200 according to an embodiment of the disclosure. FIG. 3 is a perspective view illustrating an unfolded state of an electronic device 200 according to an embodiment of the disclosure. FIG. 2 may be a view of one side surface (e.g., front surface) of the electronic device 200 as obliquely viewed. FIG. 3 may be a view of the other side surface (e.g., rear surface) of the electronic device 200 as obliquely viewed. The components described with reference to FIGS. 2 and 3 may be identical in whole or part to the components described with reference to FIG. 1. The components described with reference to FIGS. 2 and 3 may be identical in whole or part to the components described with reference to FIGS. 4 to 18. As shown in FIGS. 2 and 3, the unfolded state of the electronic device 200 may be defined as a "first state."

According to an embodiment, the electronic device 200 may include a housing 201. The electronic device 200 may include a display 202. The housing 201 may form a space where the display 202 is disposed. The display 202 may be a flexible display 202. At least a portion of the display 202 may be folded or unfolded.

According to an embodiment, the housing 201 may include a first housing 210. The housing 201 may include a second housing 220. The housing 201 may include a third housing 230. The first housing 210 may be disposed between the second housing 220 and the third housing 230. The second housing 220 may be rotatably coupled to the first housing 210. The third housing 230 may be rotatably coupled to the first housing 210. The display 202 may include a first display area 202a corresponding to the first housing 210, a second display area 202b corresponding to the second housing 220, and a third display area 202c corresponding to the third housing 230. The housing 201 may be referred to as a "foldable housing." The housing 201 may be referred to as a "multi foldable housing."

According to an embodiment, the electronic device 200 may include supports 240, 250, and 260. The supports 240, 250, and 260 may be disposed between the housing 201 and the display 202. The supports 240, 250, and 260 may be coupled to the housing 201 and may support the display 202. The supports 240, 250, and 260 may be disposed to surround edges of the display 202. The supports 240, 250, and 260 may extend along the circumference of the housing 201. The supports 240, 250, and 260 may include a first support 240 disposed in the first housing 210, a second support 250 disposed in the second housing 220, and a third support 260 disposed in the third housing 230. The support 240, 250, or 260 may be referred to as a "body". The support 240, 250, or 260 may be referred to as a "frame". The support 240, 250, or 260 may be referred to as a "sealing member". The support 240, 250, or 260 may be referred to as a "peripheral part". The support 240, 250, or 260 may be referred to as a "circumferential part". The support 240, 250, or 260 may be referred to as a "peripheral structure". The support 240, 250, or 260 may be referred to as a "circumferential structure".

According to an embodiment, the supports 240, 250, and 260 may include a first support 240. The first support 240 may be disposed between the first housing 210 and the display 202. The first support 240 may be disposed along an edge of the first housing 210. The first support 240 may include a 1-1th support 241 and a 1-2th support 242. At least a portion of the display 202 may be disposed between the 1-1th support 241 and the 1-2th support 242. The 1-1th support 241 may be disposed at one end portion of the first housing 210, and the 1-2th support 242 may be disposed at the other end portion of the first housing 210. Each of the first, second, and third supports 240, 250, and 260 may be referred to as a "support". The support 240, 250, or 260 may be referred to as a "deco," "finishing member," or "non-conductive member."

According to an embodiment, the supports 240, 250, and 260 may include a second support 250. The second support 250 may be disposed between the second housing 220 and the display 202. The second support 250 may be disposed along an edge of the second housing 220. The second support 250 may include a 2-1th support 251, a 2-2th support 252, and a 2-3th support 253. At least a portion of the display 202 may be disposed between the 2-2th support 252 and the 2-3th support 253. The 2-1th support 251 may connect the 2-2th support 252 and the 2-3th support 253. The 2-1th support 251 may extend along an edge (e.g., the edge 222 of FIG. 3) of the second housing 220. The 2-1th support 251 may be disposed between the edge 222 of the second housing 220 and the display 202. The 2-1th support 251 may be referred to as a "support frame" or a "first support frame". Each of the 2-2th support 252 and the 2-3th support 253 may be referred to as a "second support frame".

According to an embodiment, the supports 240, 250, and 260 may include a third support 260. The third support 260 may be disposed between the third housing 230 and the display 202. The third support 260 may be disposed along an edge of the third housing 230. The third support 260 may include a 3-1th support 261, a 3-2th support 262, and a 3-3th support 263. At least a portion of the display 202 may be disposed between the 3-2th support 262 and the 3-3th support 263. The 3-1th support 261 may connect the 3-2th support 262 and the 3-3th support 263. The 3-1th support 261 may extend along an edge (e.g., the edge 232 of FIG. 3) of the third housing 230. The 3-1th support 261 may be disposed between the edge 232 of the third housing 230 and the display 202. The 3-1th support 261 may be referred to as a "support frame" or a "first support frame". Each of the 3-2th support 262 and the 3-3th support 263 may be referred to as a "second support frame".

According to an embodiment, the first housing 210 may include a 1-1th side portion 211 and a 1-2th side portion 212. The 1-1th side portion 211 and the 1-2th side portion 212 may form two opposite side surfaces, respectively, of the first housing 210. The second housing 220 may be coupled to the 1-1th side portion 211. The third housing 230 may be coupled to the 1-2th side portion 212. The 1-1th side portion 211 may be referred to as a "first coupling portion". The 1-2th side portion 212 may be referred to as a "second coupling portion". The 1-1th side portion 211 may be referred to as a "first portion". The 1-2th side portion 212 may be referred to as a "second portion".

According to an embodiment, the second housing 220 may include a 2-1th side portion 221 and a 2-2th side portion 222. The 2-1th side portion 221 and the 2-2th side portion 222 may form two opposite side surfaces, respectively, of the second housing 220. The 2-1th side portion 221 may be coupled to the first housing 210. The 2-2th side portion 222 may form a side surface of the housing 201. The 2-2th side portion 222 may be referred to as an "edge". The 2-1th side portion 221 may be referred to as a "third side portion". The 2-2th side portion 222 may be referred to as a "fourth side portion".

According to an embodiment, the third housing 230 may include a 3-1th side portion 231 and a 3-2th side portion 232. The 3-1th side portion 231 and the 3-2th side portion 232 may form two opposite side surfaces, respectively, of the third housing 230. The 3-1th side portion 231 may be coupled to the first housing 210. The 3-2th side portion 232 may form a side surface of the housing 201. The 3-2th side portion 232 may be referred to as an "edge". The 3-1th side portion 231 may be referred to as a "fifth side portion". The 3-2th side portion 232 may be referred to as a "sixth side portion".

According to an embodiment, the electronic device 200 may include a first hinge 270 and a second hinge 280. The first hinge 270 may be disposed between the first housing 210 and the second housing 220. The first hinge 270 may be disposed between the 1-1th side portion 211 and the 2-1th side portion 221. The first hinge 270 may rotatably connect the first housing 210 and the second housing 220. The second hinge 280 may be disposed between the first housing 210 and the third housing 230. The second hinge 280 may be disposed between the 1-2th side portion 212 and the 3-1th side portion 231. The second hinge 280 may rotatably connect the first housing 210 and the third housing 230.

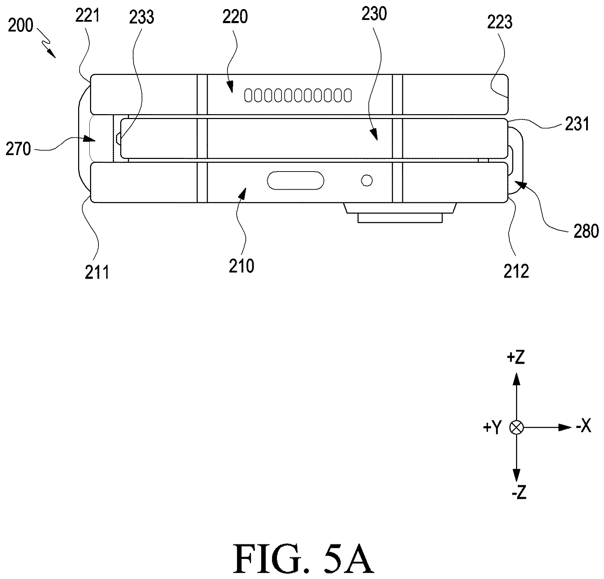

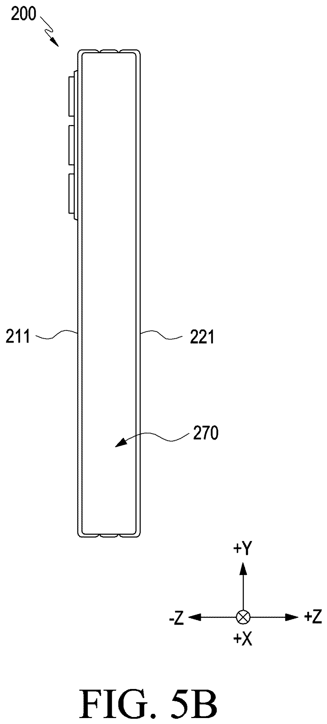

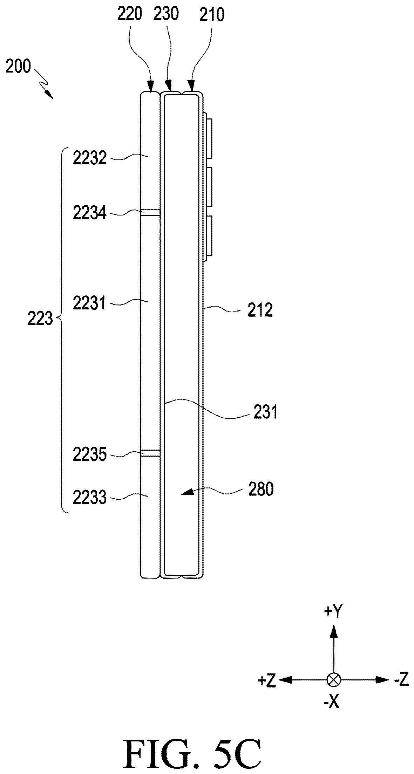

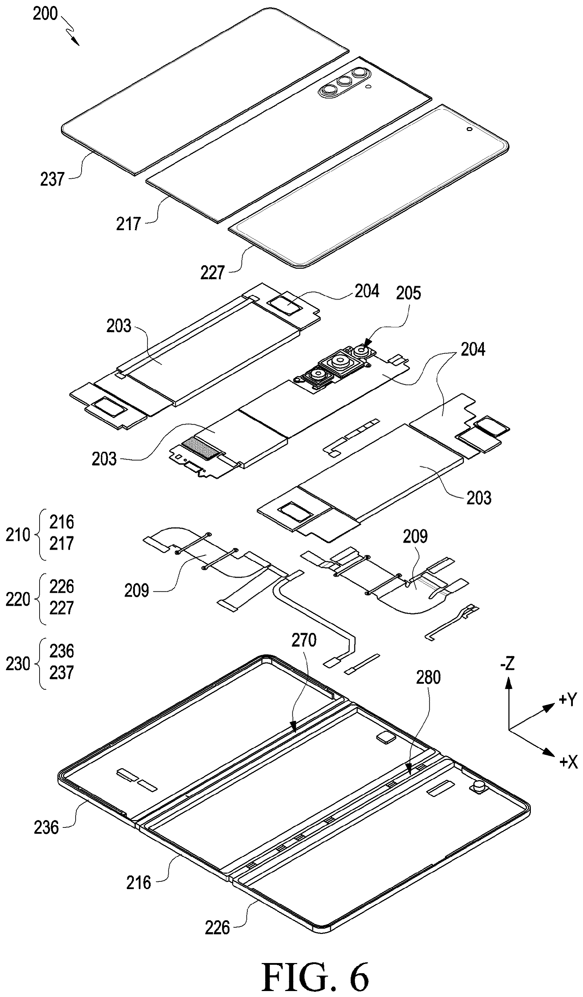

FIG. 4 is a perspective view illustrating a folded state of an electronic device 200 according to an embodiment of the disclosure. FIG. 5A is a side view of the electronic device 200 of FIG. 4 viewed from one direction (e.g., the -Y direction) to the other direction (e.g., the +Y direction). FIG. 5B is a side view of the electronic device 200 of FIG. 4 viewed from one direction (e.g., the +X direction) to the other direction (e.g., the -X direction). FIG. 5C is a side view of the electronic device 200 of FIG. 4 viewed from one direction (e.g., the -X direction) to the other direction (e.g., the +X direction). The components described with reference to FIGS. 4 to 5C may be identical in whole or part to the components described with reference to FIGS. 1 to 3. The components described with reference to FIGS. 4 to 5C may be identical in whole or part to the components described with reference to FIGS. 6 to 18. As illustrated in FIGS. 4, 5A, 5B, and 5C, a folded state of the electronic device 200 may be defined as a "second state".

According to an embodiment, the second housing 220 may be rotated with respect to the first housing 210. The first hinge 270 may provide a center of rotation to the second housing 220. The first hinge 270 may connect the 1-1th side portion 211 and the 2-1th side portion 221. The third housing 230 may be rotated with respect to the first housing 210. The second hinge 280 may provide a center of rotation to the third housing 230. The second hinge 280 may connect the 1-2th side portion 212 and the 3-1th side portion 231.

According to an embodiment, in the folded state of the electronic device 200, each of the first, second, and third housings 210, 220, and 230 may be arranged in one direction (e.g., the +Y direction). For example, the third housing 230 may be disposed above the first housing 210, and the second housing 220 may be disposed above the third housing 230. For example, the third housing 230 may be disposed between the first housing 210 and the second housing 220.

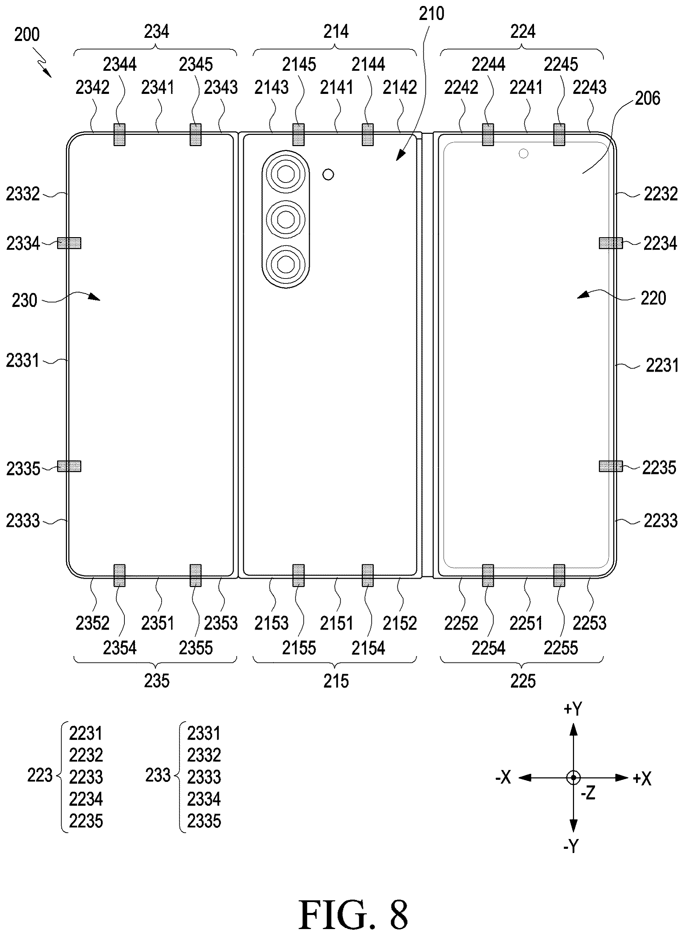

According to an embodiment, the electronic device 200 may include an antenna 223. The antenna 223 may be formed at an edge 222 of the second housing 220. The antenna 223 may be integrated with the second housing 220 and may be a portion of the edge 222. The antenna 223 may be manufactured separately from the second housing 220 and may be coupled to the edge 222 of the second housing 220. The antenna 223 may be referred to as a "first conductive portion". The antenna 223 may include a metal material. According to an embodiment, the edge 222 of the second housing 220 may be an area of the second housing 220 which overlaps an area in which the screen of the flexible display 202 is not visible from the outside of the housing (e.g., the second housing 220) when the flexible display 202 is viewed from the screen display direction (e.g., the +Z direction). For example, the edge 222 of the second housing 220 may include a bezel portion (e.g., the second support portion 257 of FIG. 8) of the second housing 220 and an antenna 223.

According to an embodiment, in the folded state of the electronic device 200, the antenna 223 may be spaced apart from the second hinge 280. One surface of the antenna 223 may face the second hinge 280. The width of the first hinge 270 may be larger than the width of the second hinge 280. For example, with reference to FIG. 5A, the length of the first hinge 270 extending in the +Z direction may be larger than the length of the second hinge 280 extending in the +Z direction.

According to an embodiment, the antenna 223 may include a first antenna portion 2231, a second antenna portion 2232, and a third antenna portion 2233. The first, second, and third antenna portions 2231, 2232, and 2233 may be spaced apart from each other along the edge 222 of the second housing 220. Each of the first, second, and third antenna portions 2231, 2232, and 2233 may include a conductive material. The antenna 223 may include a first segmented portion 2234 and a second segmented portion 2235. The first segmented portion 2234 may be disposed between the first antenna portion 2231 and the second antenna portion 2232. The second segmented portion 2235 may be disposed between the first antenna portion 2231 and the third antenna portion 2233.

According to an embodiment, the electronic device 200 may include a first antenna 215, a second antenna 225, and a third antenna 235. The first antenna 215 may form a portion of the first housing 210. The first antenna 215 may form at least a portion of the surface of the first housing 210. The second antenna 225 may form a portion of the second housing 220. The second antenna 225 may form at least a portion of the surface of the second housing 220. The third antenna 235 may form a portion of the third housing 230. The third antenna 235 may form at least a portion of the surface of the third housing 230.

According to an embodiment, the first antenna 215 may include a 1-1th antenna portion 2151, a 1-2th antenna portion 2152, and a 1-3th antenna portion 2153. The 1-1th antenna portion 2151 may be disposed between the 1-2th antenna portion 2152 and the 1-3th antenna portion 2153. The first antenna 215 may include a 1-1th segmented portion 2154 and a 1-2th segmented portion 2155. The 1-1th antenna portion 2151 and the 1-2th antenna portion 2152 may be spaced apart from each other, and the 1-1th segmented portion 2154 may be disposed between the 1-1th antenna portion 2151 and the 1-2th antenna portion 2152. The 1-1th antenna portion 2151 and the 1-3th antenna portion 2153 may be spaced apart from each other, and the 1-2th segmented portion 2155 may be disposed between the 1-1th antenna portion 2151 and the 1-3th antenna portion 2153.

According to an embodiment, the second antenna 225 may include a 2-1th antenna portion 2251, a 2-2th antenna portion 2252, and a 2-3th antenna portion 2253. The 2-1th antenna portion 2251 may be disposed between the 2-2th antenna portion 2252 and the 2-3th antenna portion 2253. The second antenna 225 may include a 2-1th segmented portion 2254 and a 2-2th segmented portion 2255. The 2-1th antenna portion 2251 and the 2-2th antenna portion 2252 may be spaced apart from each other, and the 2-1th segmented portion 2254 may be disposed between the 2-1th antenna portion 2251 and the 2-2th antenna portion 2252. The 2-1th antenna portion 2251 and the 2-3th antenna portion 2253 may be spaced apart from each other, and the 2-2th segmented portion 2255 may be disposed between the 2-1th antenna portion 2251 and the 2-3th antenna portion 2253.

According to an embodiment, the third antenna 235 may include a 3-1th antenna portion 2351, a 3-2th antenna portion 2352, and a 3-3th antenna portion 2353. The 3-1th antenna portion 2351 may be disposed between the 3-2th antenna portion 2352 and the 3-3th antenna portion 2353. The third antenna 235 may include a 3-1th segmented portion 2354 and a 3-2th segmented portion 2355. The 3-1th antenna portion 2351 and the 3-2th antenna portion 2352 may be spaced apart from each other, and the 3-1th segmented portion 2354 may be disposed between the 3-1th antenna portion 2351 and the 3-2th antenna portion 2352. The 3-1th antenna portion 2351 and the 3-3th antenna portion 2353 may be spaced apart from each other, and the 3-2th segmented portion 2355 may be disposed between the 3-1th antenna portion 2351 and the 3-3th antenna portion 2353.

According to an embodiment, in the folded state of the electronic device 200, the first housing 210, the second housing 220, and the third housing 230 may be aligned with each other. For example, in the folded state of the electronic device 200, the first housing 210, the third housing 230, and the second housing 220 may be aligned in one direction (e.g., the +Z direction) in the described order. In the folded state of the electronic device 200, the first antenna 215, the second antenna 225, and the third antenna 235 may be aligned with each other. For example, in the folded state of the electronic device 200, the first antenna 215, the third antenna 235, and the second antenna 225 may be aligned in one direction (e.g., the +Z direction) in the described order. In the folded state of the electronic device 200, the first antenna 215, the second antenna 225, and the third antenna 235 may be aligned with each other in a direction (e.g., +Z direction) in which the housings 210, 220, and 230 are stacked. For example, in the folded state of the electronic device 200, the 1-1th antenna portion 2151, the 2-1th antenna portion 2251, and the 3-1th antenna portion 2351 may be aligned in the first direction (e.g., the +Z direction). For example, in the folded state of the electronic device 200, the 1-2th antenna portion 2152, the 2-2th antenna portion 2252, and the 3-2th antenna portion 2352 may be aligned in the first direction (e.g., the +Z direction). For example, in the folded state of the electronic device 200, the 1-3th antenna portion 2153, the 2-3th antenna portion 2253, and the 3-3th antenna portion 2353 may be aligned in the first direction (e.g., the +Z direction). For example, in the folded state of the electronic device 200, the 1-1th segmented portion 2154, the 2-1th segmented portion 2254, and the 3-1th segmented portion 2354 may be aligned in the first direction (e.g., the +Z direction). For example, in the folded state of the electronic device 200, the 1-2th segmented portion 2155, the 2-2th segmented portion 2255, and the 3-2th segmented portion 2355 may be aligned in the first direction (e.g., the +Z direction).

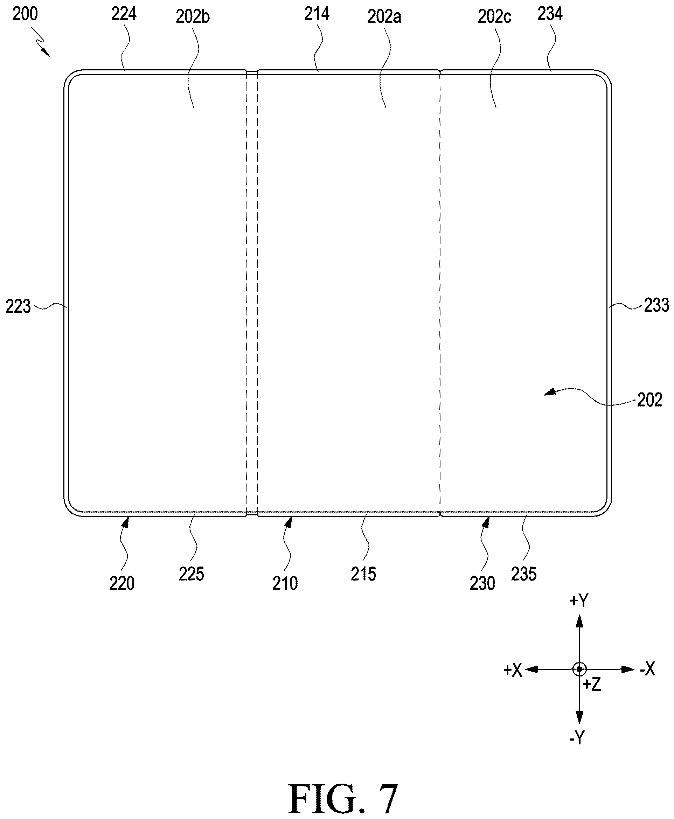

FIG. 6 is an exploded view illustrating a portion of an electronic device 200 according to an embodiment of the disclosure. FIG. 6 illustrates a state in which a display (e.g., the display 202 of FIG. 2) is not illustrated. The components described with reference to FIG. 6 may be identical in whole or part to the components described with reference to FIGS. 1 to 5C. The components described with reference to FIG. 6 may be identical in whole or part to the components described with reference to FIGS. 7 to 18.

According to an embodiment, the first housing 210 may include a first housing body 216. The first housing 210 may include a first cover 217. The first housing body 216 and the first cover 217 may be coupled to each other. At least a portion of the display (e.g., the display 202 of FIG. 2) may be seated on the first housing body 216. At least a portion of the second display (e.g., the second display 206 of FIG. 8) may be disposed between the first housing body 216 and the first cover 217.

According to an embodiment, the second housing 220 may include a second housing body 226. The second housing 220 may include a second cover 227. The second housing body 226 and the second cover 227 may be coupled to each other. At least a portion of the display (e.g., the display 202 of FIG. 2) may be seated on the second housing body 226. At least a portion of the second display (e.g., the second display 206 of FIG. 8) may be disposed between the second housing body 226 and the second cover 227. An antenna (e.g., the antenna 223 of FIG. 5C) may be a portion of the second housing body 226.

According to an embodiment, the third housing 230 may include a third housing body 236. The third housing 230 may include a third cover 237. The third housing body 236 and the third cover 237 may be coupled to each other. At least a portion of the display (e.g., the display 202 of FIG. 2) may be seated on the third housing body 236. At least a portion of the second display (e.g., the second display 206 of FIG. 8) may be disposed between the third housing body 236 and the third cover 237.

According to an embodiment, the first hinge 270 may rotatably connect the first housing body 216 and the second housing body 226. The second hinge 280 may rotatably connect the first housing body 216 and the third housing body 236.

According to an embodiment, the electronic device 200 may include a battery 203. The battery 203 may supply power to electrical components (e.g., the display 202, the second display 206, and the circuit board 204) of the electronic device 200. The battery 203 may be disposed between the housing bodies 216, 226, and 236 and the covers 217, 227, and 237. The electronic device 200 may include a circuit board 204. The circuit board 204 may be electrically connected to electrical components (e.g., the display 202, the second display 206, the antenna circuit 2236, and the battery 203) of the electronic device 200. The circuit board 204 may be disposed between the housing bodies 216, 226, and 236 and the covers 217, 227, and 237. The electronic device 200 may include a camera assembly 205. The camera assembly 205 may be disposed between the housing bodies 216, 226, and 236 and the covers 217, 227, and 237. The electronic device 200 may include a flexible circuit board 209. The flexible circuit board 209 may be connected to the circuit board 204.

According to an embodiment, the electronic device 200 may include a second conductive portion 233. The second conductive portion 233 may be a portion of the third housing 230. The second conductive portion 233 may be disposed between the first housing 210 and the second housing 220 in the folded state of the electronic device 200. The second conductive portion 233 may face the first hinge 270 in the folded state of the electronic device 200.

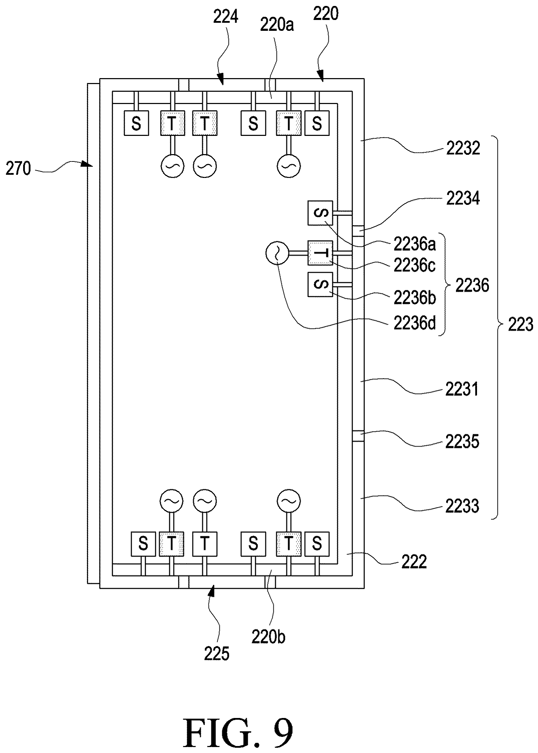

FIG. 7 is a front view illustrating the electronic device 200 in an unfolded state. FIG. 8 is a rear view illustrating the electronic device 200 in an unfolded state. Some or all of the components described with reference to FIGS. 7 and 8 may be the same as all or some of the components described with reference to FIGS. 1 to 6. Some or all of the components described with reference to FIGS. 7 and 8 may be the same as all or some of the components described with reference to FIGS. 9 to 18.

According to an embodiment, the display 202 may be received in a housing 210, 220, 230. The display 202 may include a first display area 202a corresponding to the first housing 210, a second display area 202b corresponding to the second housing 220, and a third display area 202c corresponding to the third housing 230. The display 202 may be referred to as a "first display".

According to an embodiment, the electronic device 200 may include a second display 206. The second display 206 may be disposed in a second housing 220. The second display 206 may be disposed on a rear surface of the second housing 220. A second display area 202b of the first display 202 may form one surface of the second housing 220, and the second display 206 may form another surface of the second housing 220.

According to an embodiment, the electronic device 200 may include an antenna 214, 215, 223, 224, 225, 233, 234, 235. The antenna 214, 215, 223, 224, 225, 233, 234, 235 may be disposed along an edge of the housing 210, 220, 230. The antenna 214, 215, 223, 224, 225, 233, 234, 235 may be a portion of the housing 210, 220, 230 and may form a surface of the housing 210, 220, 230. The antenna 214, 215, 223, 224, 225, 233, 234, 235 may be disposed to surround the display 202.

According to an embodiment, the electronic device 200 may include a first antenna 214, 215. The first antenna 214, 215 may form a portion of the edge of the first housing 210. The first antenna 214, 215 may include a first upper antenna 214 disposed on one side of the first housing 210 and a first lower antenna 215 disposed on another side of the first housing 210.

According to an embodiment, the electronic device 200 may include a second antenna 224, 225. The second antenna 224, 225 may form a portion of the edge of the second housing 220. The second antenna 224, 225 may include a second upper antenna 224 disposed on one side of the second housing 220 and a second lower antenna 225 disposed on another side of the second housing 220.

According to an embodiment, the electronic device 200 may include a third antenna 234, 235. The third antenna 234, 235 may form a portion of the edge of the third housing 230. The third antenna 234, 235 may include a third upper antenna 234 disposed on one side of the third housing 230 and a third lower antenna 235 disposed on another side of the third housing 230.

According to an embodiment, the first hinge 270 may be disposed between the first upper antenna 214 and the second upper antenna 224. The first hinge 270 may be disposed between the first lower antenna 215 and the second lower antenna 225. The second hinge 280 may be disposed between the first upper antenna 214 and the third upper antenna 234. The second hinge 280 may be disposed between the first lower antenna 215 and the third lower antenna 235.

According to an embodiment, the electronic device 200 may include a first conductive portion 223. The first conductive portion 223 may form a portion of the edge of the second housing 220. The first conductive portion 223 may connect the second upper antenna 224 and the second lower antenna 225. The first conductive portion 223 may form a side surface of the housing 210, 220, 230. For example, the first conductive portion 223 may form a side surface of the second housing 220. The first conductive portion 223 may be referred to as a "first side antenna."

According to an embodiment, the electronic device 200 may include a second conductive portion 233. The second conductive portion 233 may form a portion of the edge of the third housing 230. The second conductive portion 233 may connect the third upper antenna 234 and the third lower antenna 235. The second conductive portion 233 may form a side surface of the housing 210, 220, 230. For example, the second conductive portion 233 may form a side surface of the third housing 230. The second conductive portion 233 may be referred to as a "second side antenna."

According to an embodiment, the first upper antenna 214 may include a 1-1th upper antenna portion 2141, a 1-2th upper antenna portion 2142, a 1-3th upper antenna portion 2143, a 1-1th upper segmented portion 2144, and a 1-2th upper segmented portion 2145. The 1-1th upper antenna portion 2141 may be disposed between the 1-2th upper antenna portion 2142 and the 1-3th upper antenna portion 2143. The 1-1th upper segmented portion 2144 may be disposed between the 1-1th upper antenna portion 2141 and the 1-2th upper antenna portion 2142. The 1-2th upper segmented portion 2145 may be disposed between the 1-1th upper antenna portion 2141 and the 1-3th upper antenna portion 2143. The first hinge 270 may be disposed between the 1-2th upper antenna portion 2142 and the 2-2th upper antenna portion 2242. The second hinge 280 may be disposed between the 1-3th upper antenna portion 2143 and the 3-3th upper antenna portion 2343.

According to an embodiment, the first lower antenna 215 may include a 1-1th lower antenna portion 2151, a 1-2th lower antenna portion 2152, a 1-3th lower antenna portion 2153, a 1-1th lower segmented portion 2154, and a 1-2th lower segmented portion 2155. The 1-1th lower antenna portion 2151 may be disposed between the 1-2th lower antenna portion 2152 and the 1-3th lower antenna portion 2153. The 1-1th lower segmented portion 2154 may be disposed between the 1-1th lower antenna portion 2151 and the 1-2th lower antenna portion 2152. The 1-2th lower segmented portion 2155 may be disposed between the 1-1th lower antenna portion 2151 and the 1-3th lower antenna portion 2153. The first hinge 270 may be disposed between the 1-2th lower antenna portion 2152 and the 2-2th lower antenna portion 2252. The second hinge 280 may be disposed between the 1-3th lower antenna portion 2153 and the 3-3th lower antenna portion 2353.

According to an embodiment, the second upper antenna 224 may include a 2-1th upper antenna portion 2241, a 2-2th upper antenna portion 2242, a 2-3th upper antenna portion 2243, a 2-1th upper segmented portion 2244, and a 2-2th upper segmented portion 2245. The 2-1th upper antenna portion 2241 may be disposed between the 2-2th upper antenna portion 2242 and the 2-3th upper antenna portion 2243. The 2-1th upper segmented portion 2244 may be disposed between the 2-1th upper antenna portion 2241 and the 2-2th upper antenna portion 2242. The 2-2th upper segmented portion 2245 may be disposed between the 2-1th upper antenna portion 2241 and the 2-3th upper antenna portion 2243. The first hinge 270 may be disposed between the 1-2th upper antenna portion 2142 and the 2-2th upper antenna portion 2242. The 2-3th upper antenna portion 2243 may be connected to the first conductive portion 223.

According to an embodiment, the second lower antenna 225 may include a 2-1th lower antenna portion 2251, a 2-2th lower antenna portion 2252, a 2-3th lower antenna portion 2253, a 2-1th lower segmented portion 2254, and a 2-2th lower segmented portion 2255. The 2-1th lower antenna portion 2251 may be disposed between the 2-2th lower antenna portion 2252 and the 2-3th lower antenna portion 2253. The 2-1th lower segmented portion 2254 may be disposed between the 2-1th lower antenna portion 2251 and the 2-2th lower antenna portion 2252. The 2-2th lower segmented portion 2255 may be disposed between the 2-1th lower antenna portion 2251 and the 2-3th lower antenna portion 2253. The first hinge 270 may be disposed between the 1-2th lower antenna portion 2152 and the 2-2th lower antenna portion 2252. The 2-3th lower antenna portion 2253 may be connected to the first conductive portion 223.

According to an embodiment, the third upper antenna 234 may include a 3-1th upper antenna portion 2341, a 3-2th upper antenna portion 2342, a 3-3th upper antenna portion 2343, a 3-1th upper segmented portion 2344, and a 3-2th upper segmented portion 2345. The 3-1th upper antenna portion 2341 may be disposed between the 3-2th upper antenna portion 2342 and the 3-3th upper antenna portion 2343. The 3-1th upper segmented portion 2344 may be disposed between the 3-1th upper antenna portion 2341 and the 3-2th upper antenna portion 2342. The 3-2th upper segmented portion 2345 may be disposed between the 3-1th upper antenna portion 2341 and the 3-3th upper antenna portion 2343. The second hinge 280 may be disposed between the 1-3th upper antenna portion 2143 and the 3-3th upper antenna portion 2343. The 3-2th upper antenna portion 2342 may be connected to the second conductive portion 233.

According to an embodiment, the third lower antenna 235 may include a 3-1th lower antenna portion 2351, a 3-2th lower antenna portion 2352, a 3-3th lower antenna portion 2353, a 3-1th lower segmented portion 2354, and a 3-2th lower segmented portion 2355. The 3-1th lower antenna portion 2351 may be disposed between the 3-2th lower antenna portion 2352 and the 3-3th lower antenna portion 2353. The 3-1th lower segmented portion 2354 may be disposed between the 3-1th lower antenna portion 2351 and the 3-2th lower antenna portion 2352. The 3-2th lower segmented portion 2355 may be disposed between the 3-1th lower antenna portion 2351 and the 3-3th lower antenna portion 2353. The second hinge 280 may be disposed between the 1-3th lower antenna portion 2153 and the 3-3th lower antenna portion 2353. The 3-2th lower antenna portion 2352 may be connected to the second conductive portion 233.

According to an embodiment, the first conductive portion 223 may include a 1-1th conductive portion 2231, a 1-2th conductive portion 2232, a 1-3th conductive portion 2233, a 1-1th segmented portion 2234, and a 1-2th segmented portion 2235. The 1-1th conductive portion 2231 may be disposed between the 1-2th conductive portion 2232 and the 1-3th conductive portion 2233. The 1-1th segmented portion 2234 may be disposed between the 1-1th conductive portion 2231 and the 1-2th conductive portion 2232. The 1-2th segmented portion 2235 may be disposed between the 1-1th conductive portion 2231 and the 1-3th conductive portion 2233. The 1-2th conductive portion 2232 may be connected to the 2-3th upper antenna portion 2243. The 1-2th conductive portion 2232 and the 2-3th upper antenna portion 2243 may extend in directions intersecting each other. The 1-3th conductive portion 2233 may be connected to the 2-3th lower antenna portion 2253. The 1-3th conductive portion 2233 and the 2-3th lower antenna portion 2253 may extend in directions intersecting each other.

According to an embodiment, the second conductive portion 233 may include a 2-1th conductive portion 2331, a 2-2th conductive portion 2332, a 2-3th conductive portion 2333, a 2-1th segmented portion 2334, and a 2-2th segmented portion 2335. The 2-1th conductive portion 2331 may be disposed between the 2-2th conductive portion 2332 and the 2-3th conductive portion 2333. The 2-1th segmented portion 2334 may be disposed between the 2-1th conductive portion 2331 and the 2-2th conductive portion 2332. The 2-2th segmented portion 2335 may be disposed between the 2-1th conductive portion 2331 and the 2-3th conductive portion 2333. The 2-2th conductive portion 2332 may be connected to the 3-2th upper antenna portion 2342. The 2-2th conductive portion 2332 and the 3-2th upper antenna portion 2342 may extend in directions intersecting each other. The 2-3th conductive portion 2333 may be connected to the 3-2th lower antenna portion 2352. The 2-3th conductive portion 2333 and the 3-2th lower antenna portion 2352 may extend in directions intersecting each other.

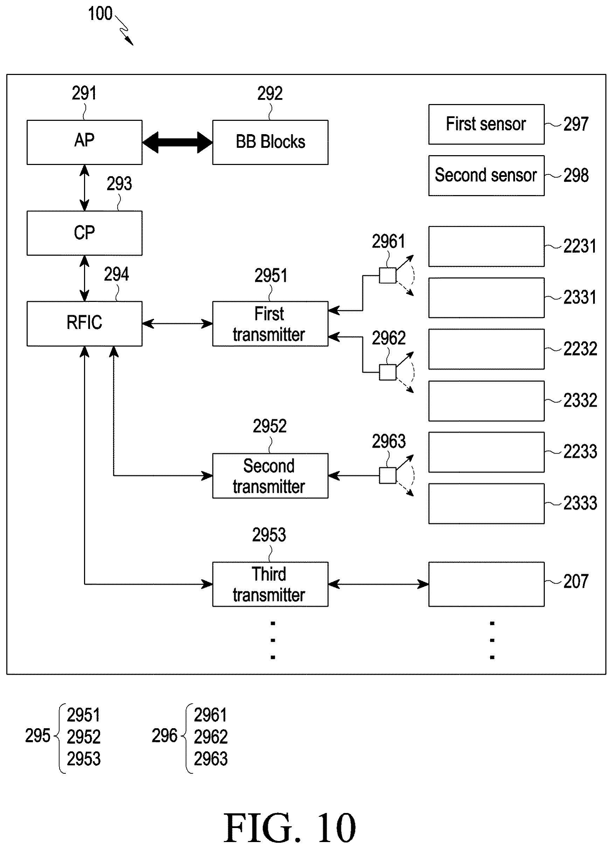

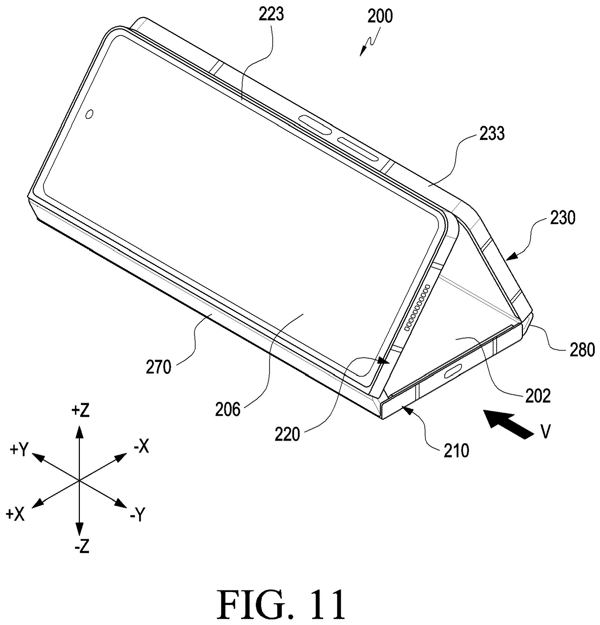

FIG. 9 is a view conceptually illustrating a portion of the electronic device 200 for describing the structure of the antenna 223 according to an embodiment of the disclosure. FIG. 10 is an RF block diagram for describing the operation of the antenna 223, 233 according to an embodiment of the disclosure. Some or all of the components described with reference to FIGS. 9 and 10 may be the same as all or some of the components described with reference to FIGS. 1 to 8. Components described with reference to FIGS. 9 and 10 may be identical in whole or part to components described with reference to FIGS. 11 to 18.

According to an embodiment, the first conductive portion 223 may be disposed at an edge 222 of the second housing 220. The first conductive portion 223 may be a portion of the edge 222. The first conductive portion 223 may include an antenna circuit 2236. The antenna circuit 2236 may be electrically connected to a circuit board (e.g., the circuit board 204 of FIG. 6). The antenna circuit 2236 may include a first circuit switch 2236a and a second circuit switch 2236b. The 1-1th segmented portion 2234 may be positioned between the first circuit switch 2236a and the second circuit switch 2236b. The antenna circuit 2236 may include a tuner 2236c. The antenna circuit 2236 may include a feeding unit 2236d. The feeding unit 2236d may be connected to the tuner 2236c.

According to an embodiment, the second upper antenna 224 may be disposed at a first end portion 220a of the second housing 220. The second lower antenna 225 may be disposed at a second end portion 220b of the second housing 220. The first conductive portion 223 may connect the second upper antenna 224 and the second lower antenna 225.

According to an embodiment, a network environment 100 may include a communication module 291, 292, 293, 294, 295. The communication module 291, 292, 293, 294, 295 may be the same as the components described with reference to FIG. 1 (e.g., the communication module 190, the first and second networks 198, 199, the server 108). The network environment 100 may include a transmitter 295. The transmitter 295 may transmit signals of different frequency bands to the antenna 2231, 2232, 2233, 2331, 2332, 2333, 207. The transmitter 295 may include a first transmitter 2951. The first transmitter 2951 may transmit a signal of a first frequency band to the 1-1th conductive portion 2231, the 2-1th conductive portion 2331, the 1-2th conductive portion 2232, or the 2-2th conductive portion 2332. The transmitter 295 may include a second transmitter 2952. The second transmitter 2952 may transmit a signal of a second frequency band different from the signal of the first frequency band to the 1-3th conductive portion 2233 or the 2-3th conductive portion 2333. The transmitter 295 may include a third transmitter 2953. The third transmitter 2953 may transmit a signal of a third frequency band different from the signals of the first and second frequency bands to the antenna 207. The antenna 207 may include an upper antenna 214, 224, 234 and a lower antenna 215, 225, 235. The transmitter 295 may be an RFFE.

According to an embodiment, the electronic device 200 may include a switch 296. The switch 296 may connect the transmitter 295 and the antenna 2231, 2232, 2233, 2331, 2332, 2333, 207. The switch 296 may adjust a path of a signal transmitted from the transmitter 295. The switch 296 may include a first switch 2961. The first switch 2961 may selectively connect the first transmitter 2951 to the 1-1th conductive portion 2231 or the 2-1th conductive portion 2331. The switch 296 may include a second switch 2962. The second switch 2962 may selectively connect the first transmitter 2951 to the 1-2th conductive portion 2232 or the 2-2th conductive portion 2332. The switch 296 may include a third switch 2963. The third switch 2963 may selectively connect the second transmitter 2952 to the 1-3th conductive portion 2233 or the 2-3th conductive portion 2333.

According to an embodiment, the switch 296 may connect the transmitter 295 and the first conductive portion 223, or connect the transmitter 295 and the second conductive portion 233. The switch 296 may selectively connect the transmitter 295 to the first conductive portion 223 or the second conductive portion 233. The transmitter 295 may transmit a signal to either the first conductive portion 223 or the second conductive portion 233. When the first conductive portion 223 is used, the second conductive portion 233 may not be used. When the first conductive portion 223 is not used, the second conductive portion 233 may be used.

According to an embodiment, an electronic device 100 may include a first sensor 297 and a second sensor 298. The first sensor 297 may measure an angle between the first housing (e.g., the first housing 210 of FIGS. 1 to 9) and the second housing (e.g., the second housing 220 of FIGS. 1 to 9). The second sensor 298 may measure an angle between the first housing (e.g., the first housing 210 of FIGS. 1 to 9) and the third housing (e.g., the third housing 230 of FIGS. 1 to 9). The first sensor 297 and the second sensor 298 may be angle sensors. Each of the first sensor 297 and the second sensor 298 may be electrically connected to a processor (e.g., the processor 120 of FIG. 1). The processor 120 may control the switch 296 based on values measured by the first sensor 297 and the second sensor 298.

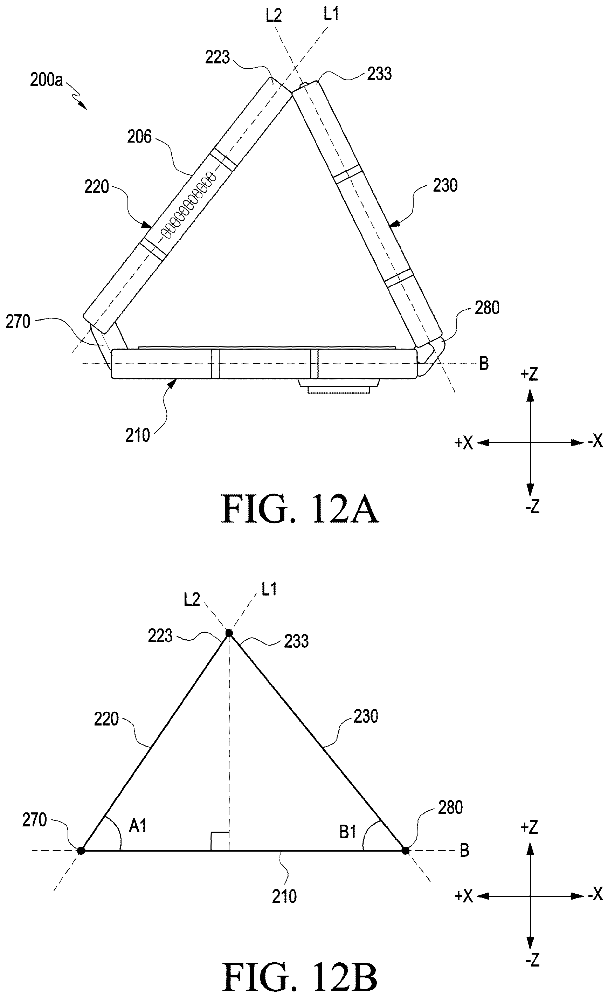

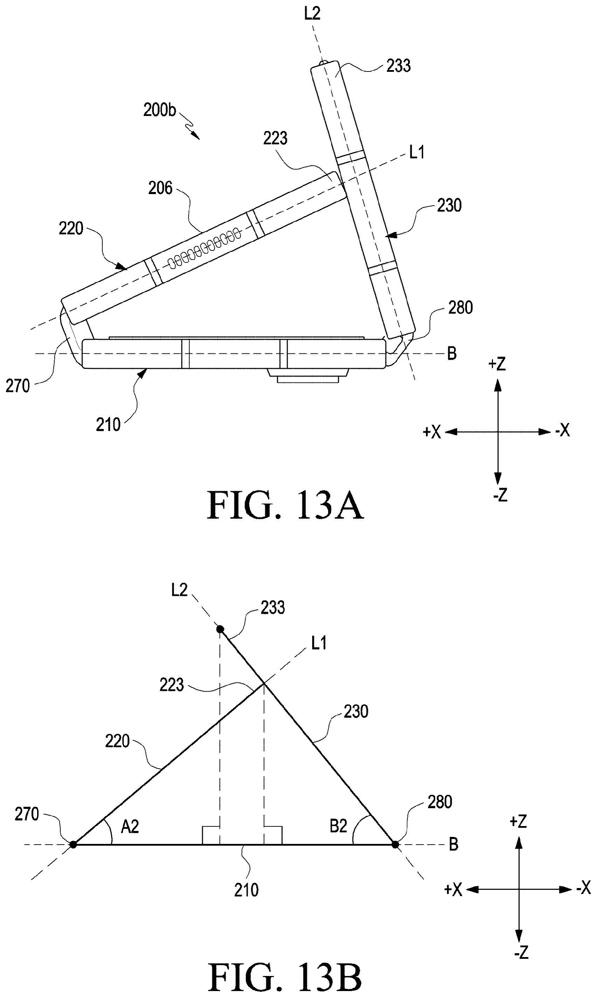

FIG. 11 is a perspective view illustrating a state in which the second housing 220 and the third housing 230 of the electronic device 200 are folded at a predetermined angle with respect to the first housing 210. FIG. 12A is a view viewing the state of FIG. 11 from one direction (e.g., V direction). FIG. 12B is a view conceptually illustrating the structure of FIG. 12A. Components described with reference to FIGS. 11, 12A, and 12B may be identical in whole or part to the components described with reference to FIGS. 1 to 10. Components described with reference to FIGS. 11, 12A, and 12B may be identical in whole or part to the components described with reference to FIGS. 13A to 18.

According to an embodiment, the second housing 220 may be rotated with respect to the first housing 210. The first hinge 270 may rotatably couple the first housing 210 and the second housing 220. The third housing 230 may be rotated with respect to the first housing 210. The second hinge 280 may rotatably couple the first housing 210 and the third housing 230.

According to an embodiment, the second housing 220 and the third housing 230 may be rotated with respect to the first housing 210 in directions approaching each other. A direction in which the second housing 220 is rotated with respect to the first housing 210 and a direction in which the third housing 230 is rotated with respect to the first housing 210 may be opposite to each other.

According to an embodiment, when each of the second housing 220 and the third housing 230 is folded at a predetermined angle with respect to the first housing 210, the first conductive portion 223 and the second conductive portion 233 may face each other. The first conductive portion 223 and the second conductive portion 233 may contact each other or may be spaced apart from each other by a predetermined distance. When each of the second housing 220 and the third housing 230 is folded at a predetermined angle with respect to the first housing 210, the second display 206 may be exposed to the outside of the housing 210, 220, 230. The second display 206 may be exposed to the outside of the second housing 220.

According to an embodiment, the electronic device 200 may operate in a first state 200a. The first state 200a may be a state in which each of the second housing 220 and the third housing 230 is rotated at a predetermined angle with respect to the first housing 210. In the first state 200a, the first conductive portion 223 and the second conductive portion 233 may face each other. The first state 200a may be the state of the electronic device 200 illustrated in FIGS. 11 and 12A.

According to an embodiment, in the first state 200a, the first conductive portion 223 and the second conductive portion 233 may contact each other. A first line L1 extending from the first hinge 270 toward the first conductive portion 223 and a second line L2 extending from the second hinge 280 toward the second conductive portion 233 may intersect each other. In the first state 200a, the second conductive portion 233 may be positioned offset with respect to a direction (e.g., L1) toward which the first conductive portion 223 faces. In the first state 200a, the second conductive portion 233 may be spaced apart from the first conductive portion 223 with respect to a direction L1 toward which the first conductive portion 223 faces.

According to an embodiment, in the first state 200a, the second housing 220 may be rotated by a first angle A1 with respect to the first housing 210. The first angle A1 may be an angle A1 where the first line L1 is inclined with respect to a reference line B where the first housing 210 is positioned. In the first state 200a, the third housing 230 may be rotated by a second angle B1 with respect to the first housing 210. The second angle B1 may be an angle B1 where the second line L2 is inclined with respect to the reference line B where the first housing 210 is positioned.

According to an embodiment, in the first state 200a, a current may be supplied to the first conductive portion 223. In the first state 200a, a current may not be supplied to the second conductive portion 233. In the first state 200a, the electronic device 200 may use only the first conductive portion 223 and not use the second conductive portion 233. The switch (e.g., the switch 296 of FIG. 10) may transmit a signal to the first conductive portion 2231, 2232, 2233 and may not transmit a signal to the second conductive portion 2331, 2332, 2333.

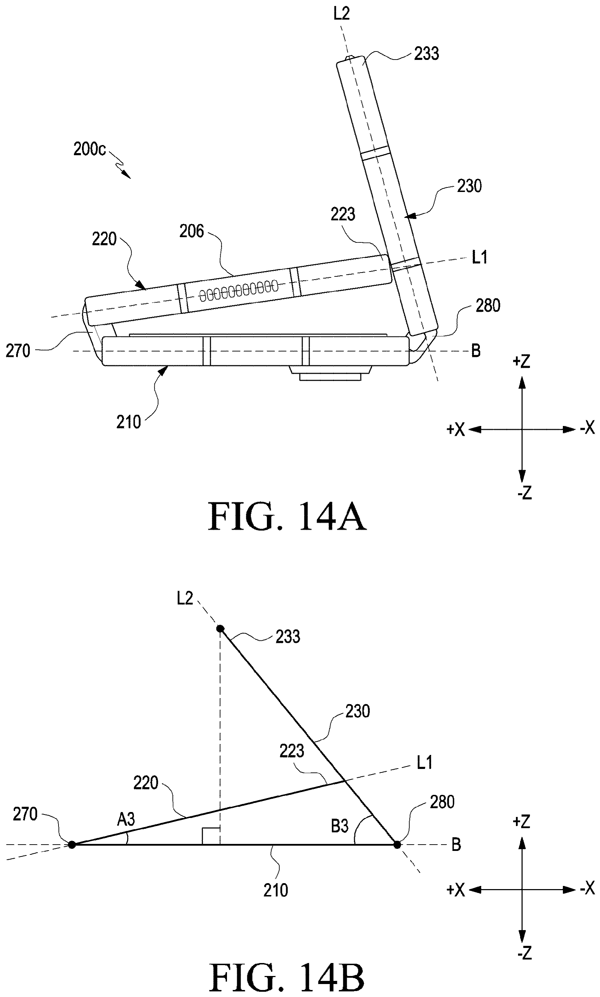

FIG. 13A is a view viewing the electronic device 200 operating in a second state 200b from one direction (e.g., V direction of FIG. 11). FIG. 13B is a view conceptually illustrating the structure of FIG. 13A. Components described with reference to FIGS. 13A and 13B may be identical in whole or part to the components described with reference to FIGS. 1 to 12B. Components described with reference to FIGS. 13A and 13B may be identical in whole or part to the components described with reference to FIGS. 14A to 18.

According to an embodiment, the second housing 220 and the third housing 230 may be rotated with respect to the first housing 210 in directions approaching each other. A direction in which the second housing 220 is rotated with respect to the first housing 210 and a direction in which the third housing 230 is rotated with respect to the first housing 210 may be opposite to each other.

According to an embodiment, the electronic device 200 may operate in a second state 200b. The second state 200b may be a state in which each of the second housing 220 and the third housing 230 is rotated at a predetermined angle with respect to the first housing 210. In the second state 200b, the first conductive portion 223 may face the third housing 230. The second state 200b may be the state of the electronic device 200 illustrated in FIG. 13A.

According to an embodiment, in the second state 200b, the first conductive portion 223 may face the third housing 230. A first line L1 extending from the first hinge 270 toward the first conductive portion 223 and a second line L2 extending from the second hinge 280 toward the second conductive portion 233 may intersect each other. In the second state 200b, a portion of the third housing 230 may be positioned on a line L1 extending from the first conductive portion 223. In the second state 200b, the first conductive portion 223 may face a portion of the display disposed in the third housing 230 (e.g., the third display area 202c of FIG. 2). In the second state 200b, an electromagnetic signal radiated from the first conductive portion 223 may be interfered with by the third housing 230. In the second state 200b, the third housing 230 may be positioned on a radiating path (e.g., the first line L1) of the first conductive portion 223.

According to an embodiment, in the second state 200b, the second housing 220 may be rotated by a first angle A2 with respect to the first housing 210. The first angle A2 may be an angle A2 where the first line L1 is inclined with respect to a reference line B where the first housing 210 is positioned. In the second state 200b, the third housing 230 may be rotated by a second angle B2 with respect to the first housing 210. The second angle B2 may be an angle B2 where the second line L2 is inclined with respect to the reference line B where the first housing 210 is positioned.

According to an embodiment, in the second state 200b, a current may not be supplied to the first conductive portion 223. In the second state 200b, a current may be supplied to the second conductive portion 233. In the second state 200b, the electronic device 200 may use only the second conductive portion 233 and not use the first conductive portion 223. The switch (e.g., the switch 296 of FIG. 10) may not transmit a signal to the first conductive portion 2231, 2232, 2233 and may transmit a signal to the second conductive portion 2331, 2332, 2333.

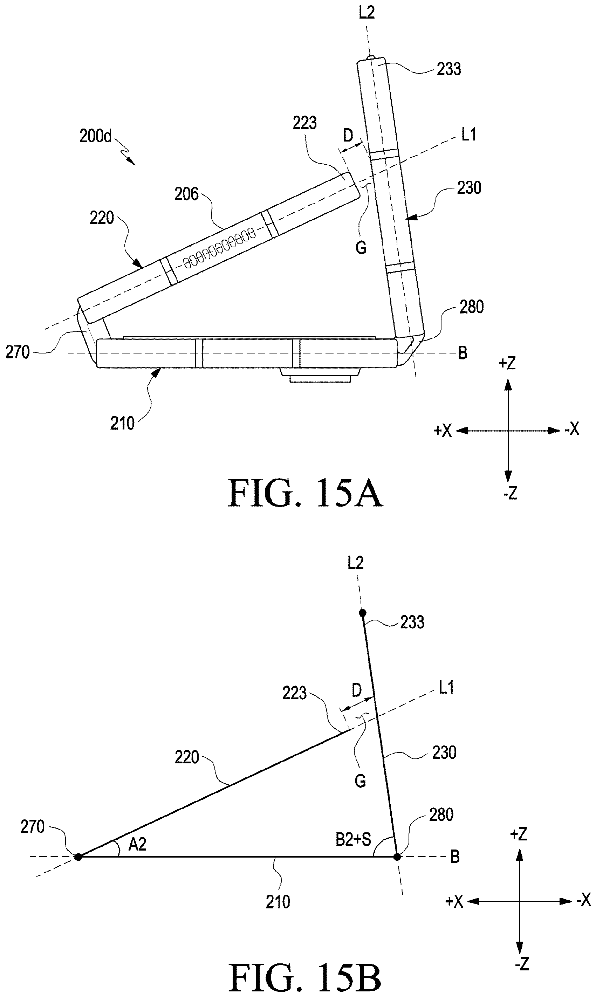

FIG. 14A is a view viewing the electronic device 200 operating in a third state 200c from one direction (e.g., V direction of FIG. 11). FIG. 14B is a view conceptually illustrating the structure of FIG. 14A. Components described with reference to FIGS. 14A and 14B may be identical in whole or part to the components described with reference to FIGS. 1 to 13B. Components described with reference to FIGS. 14A and 14B may be identical in whole or part to the components described with reference to FIGS. 15A to 18.

According to an embodiment, the second housing 220 and the third housing 230 may be rotated with respect to the first housing 210 in directions approaching each other. A direction in which the second housing 220 is rotated with respect to the first housing 210 and a direction in which the third housing 230 is rotated with respect to the first housing 210 may be opposite to each other.

According to an embodiment, the electronic device 200 may operate in a third state 200c. The third state 200c may be a state in which each of the second housing 220 and the third housing 230 is rotated at a predetermined angle with respect to the first housing 210. In the third state 200c, the first conductive portion 223 may face the third housing 230. The third state 200c may be the state of the electronic device 200 illustrated in FIG. 14A.

According to an embodiment, in the third state 200c, the first conductive portion 223 may face the third housing 230. A first line L1 extending from the first hinge 270 toward the first conductive portion 223 and a second line L2 extending from the second hinge 280 toward the second conductive portion 233 may intersect each other. In the third state 200c, a portion of the third housing 230 may be positioned on a line L1 extending from the first conductive portion 223. In the third state 200c, the first conductive portion 223 may face a portion of the display disposed in the third housing 230 (e.g., the third display area 202c of FIG. 2). In the third state 200c, an electromagnetic signal radiated from the first conductive portion 223 may be interfered with by the third housing 230. In the third state 200c, the third housing 230 may be positioned on a radiating path (e.g., the first line L1) of the first conductive portion 223.

According to an embodiment, in the third state 200c, the second housing 220 may be rotated by a first angle A3 with respect to the first housing 210. The first angle A3 may be an angle A3 where the first line L1 is inclined with respect to a reference line B where the first housing 210 is positioned. In the third state 200c, the third housing 230 may be rotated by a second angle B3 with respect to the first housing 210. The second angle B3 may be an angle B3 where the second line L2 is inclined with respect to the reference line B where the first housing 210 is positioned. In the third state 200c, the first angle A3 may be less than the first angle A2 in the second state 200b.

According to an embodiment, in the third state 200c, a current may not be supplied to the first conductive portion 223. In the third state 200c, a current may be supplied to the second conductive portion 233. In the third state 200c, the electronic device 200 may use only the second conductive portion 233 and not use the first conductive portion 223. The switch (e.g., the switch 296 of FIG. 10) may not transmit a signal to the first conductive portion 2231, 2232, 2233 and may transmit a signal to the second conductive portion 2331, 2332, 2333.

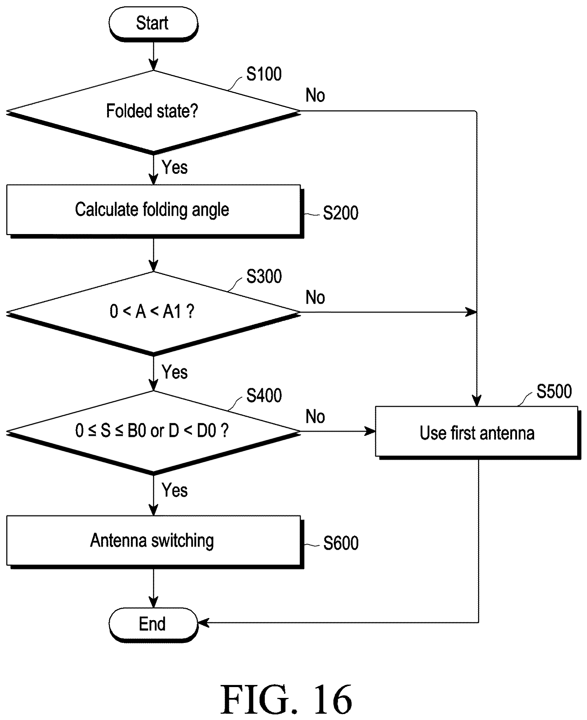

FIG. 15A is a view viewing the electronic device 200 operating in a fourth state 200d from one direction (e.g., V direction of FIG. 11). FIG. 15B is a view conceptually illustrating the structure of FIG. 15A. Components described with reference to FIGS. 15A and 15B may be identical in whole or part to the components described with reference to FIGS. 1 to 14B. Components described with reference to FIGS. 15A and 15B may be identical in whole or part to the components described with reference to FIGS. 16 to 18.

According to an embodiment, the second housing 220 and the third housing 230 may be rotated with respect to the first housing 210 in directions approaching each other. A direction in which the second housing 220 is rotated with respect to the first housing 210 and a direction in which the third housing 230 is rotated with respect to the first housing 210 may be opposite to each other.

According to an embodiment, the electronic device 200 may operate in a fourth state 200d. The fourth state 200d may be a state in which each of the second housing 220 and the third housing 230 is rotated at a predetermined angle with respect to the first housing 210. In the fourth state 200d, the first conductive portion 223 may face the third housing 230. The fourth state 200d may be the state of the electronic device 200 illustrated in FIG. 15A.

According to an embodiment, in the fourth state 200d, the first conductive portion 223 may face the third housing 230. A first line L1 extending from the first hinge 270 toward the first conductive portion 223 and a second line L2 extending from the second hinge 280 toward the second conductive portion 233 may intersect each other. In the fourth state 200d, a portion of the third housing 230 may be positioned on a line L1 extending from the first conductive portion 223. In the fourth state 200d, the first conductive portion 223 may face a portion of the display disposed in the third housing 230 (e.g., the third display area 202c of FIG. 2). In the fourth state 200d, an electromagnetic signal radiated from the first conductive portion 223 may be interfered with by the third housing 230. In the fourth state 200d, the third housing 230 may be positioned on a radiating path (e.g., the first line L1) of the first conductive portion 223.

According to an embodiment, in the fourth state 200d, the first conductive portion 223 and the third housing 230 may be spaced apart. In the fourth state 200d, an end portion surface of the first conductive portion 223 and one surface of the display disposed in the third housing 230 (e.g., the third display area 202c of FIG. 2) may be spaced apart. In the fourth state 200d, a gap G may be formed between the first conductive portion 223 and the third housing 230. In the fourth state 200d, a spaced distance D may be formed between the first conductive portion 223 and the third housing 230.

According to an embodiment, in the fourth state 200d, the second housing 220 may be rotated by a first angle A2 with respect to the first housing 210. The first angle A2 may be an angle A2 where the first line L1 is inclined with respect to a reference line B where the first housing 210 is positioned. In the fourth state 200d, the third housing 230 may be rotated by a second angle B2+S with respect to the first housing 210. The second angle B2+S may be an angle B2+S where the second line L2 is inclined with respect to the reference line B where the first housing 210 is positioned. In the fourth state 200d, the first angle A2 may be substantially the same as the first angle A2 in the second state 200b. In the fourth state 200d, the second angle B2+S may be a value obtained by adding an increment S to the second angle B2 in the second state 200b. The increment S may be an angular displacement between the first housing 210 and the third housing 230.

According to an embodiment, in the fourth state 200d, a current may not be supplied to the first conductive portion 223. In the fourth state 200d, a current may be supplied to the second conductive portion 233. In the fourth state 200d, the electronic device 200 may use only the second conductive portion 233 and not use the first conductive portion 223. The switch (e.g., the switch 296 of FIG. 10) may not transmit a signal to the first conductive portion 2231, 2232, 2233 and may transmit a signal to the second conductive portion 2331, 2332, 2333.

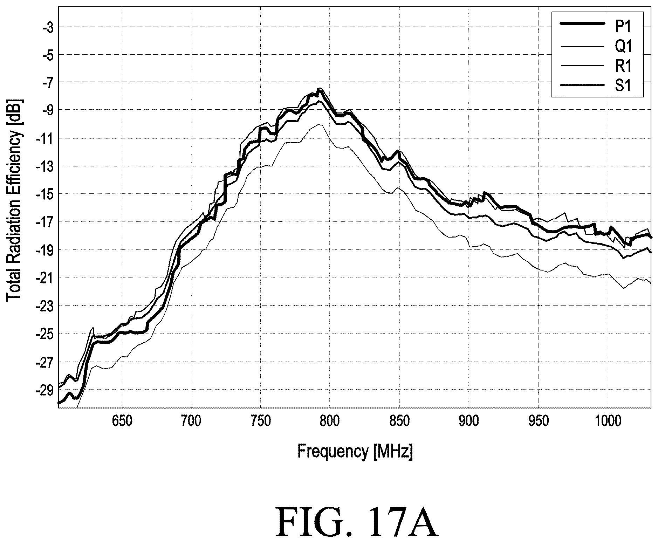

FIG. 16 is a block diagram illustrating a driving control method of the electronic device 200 according to an embodiment of the disclosure. Components described with reference to FIG. 16 may be identical in whole or part to the components described with reference to FIGS. 1 to 15B. Components described with reference to FIG. 16 may be identical in whole or part to the components described with reference to FIGS. 17A to 18.

According to an embodiment, an electronic device (e.g., the electronic device 101 of FIG. 1) may include a processor (e.g., the processor 120 of FIG. 1). The processor 120 may be disposed on a circuit board (e.g., the circuit board 204 of FIG. 6). The circuit board 204 may be electrically connected to a switch (e.g., the switch 296 of FIG. 10) and an antenna (e.g., the antenna 2231, 2232, 2233, 2331, 2332, 2333 of FIG. 10). The circuit board 204 may transmit an electrical signal to the switch 296 and the antenna 2231, 2232, 2233, 2331, 2332, 2333. The processor 120 and the circuit board 204 may control the switch 296. The processor 120 may control the switch 296 based on a folding angle between the housings 210, 220, 230 (e.g., the angles A1, A2, A3, B1, B2, B3 of FIGS. 12A to 15B) or a spaced distance between the second housing 220 and the third housing 230 (e.g., the spaced distance D of FIG. 15A). The processor 120 may be electrically connected to a first sensor (e.g., the first sensor 297 of FIG. 10) and a second sensor (e.g., the second sensor 298 of FIG. 10). The processor 120 may control the switch 296 based on values measured by the first sensor 297 and the second sensor 298.

According to an embodiment, a control method of the electronic device 200 may include a first process S100. In the first process S100, the processor 120 may determine a folding state of the housing 210, 220, 230. The processor 120 may determine the electronic device 200 to be in a folded state when an angle between the first housing 210 and the second housing 220 (e.g., the angles A1, A2, A3 of FIGS. 12A to 15B) is not 180 degrees. The processor 120 may determine the electronic device 200 to be in a folded state when both an angle between the first housing 210 and the second housing 220 (e.g., the angles A1, A2, A3 of FIGS. 12A to 15B) and an angle between the first housing 210 and the third housing 230 (e.g., the angles B1, B2, B3, B2+S of FIGS. 12A to 15B) are not 180 degrees. The processor 120 may determine the electronic device 200 to be in an unfolded state when an angle between the first housing 210 and the second housing 220 (e.g., the angles A1, A2, A3 of FIGS. 12A to 15B) is 180 degrees. The processor 120 may determine the electronic device 200 to be in an unfolded state when both an angle between the first housing 210 and the second housing 220 (e.g., the angles A1, A2, A3 of FIGS. 12A to 15B) and an angle between the first housing 210 and the third housing 230 (e.g., the angles B1, B2, B3, B2+S of FIGS. 12A to 15B) are 180 degrees. When the processor 120 determines the electronic device 200 to be in an unfolded state, the processor 120 may electrically connect the switch 296 to a first antenna (e.g., the first antenna 2231, 2232, 2233 of FIG. 10) so that the first antenna 2231, 2232, 2233 is used (S500).

According to an embodiment, a control method of the electronic device 200 may include a second process S200. In the second process S200, the processor 120 may calculate a folding angle between the housings 210, 220, 230. In the second process S200, the processor 120 may calculate an angle between the first housing 210 and the second housing 220 (e.g., the first angles A1, A2, A3 of FIGS. 12A to 15B). In the second process S200, the processor 120 may calculate an angle between the first housing 210 and the third housing 230 (e.g., the first angles B1, B2, B3, B2+S of FIGS. 12A to 15B). In the second process S200, the processor 120 may calculate a spaced distance between the first conductive portion 223 and the third housing 230 (e.g., the spaced distance D of FIG. 15A).

According to an embodiment, a control method of the electronic device 200 may include a third process S300. In the third process S300, the processor 120 may compare an angle A between the first housing 210 and the second housing 220 calculated in the second process S200 with a first reference value A1. The processor 120 may proceed to a fourth process S400 when the angle A between the first housing 210 and the second housing 220 is greater than 0 and less than the first reference value A1. When the angle A between the first housing 210 and the second housing 220 is greater than the first reference value A1, the processor 120 may electrically connect the switch 296 to a first antenna (e.g., the first antenna 2231, 2232, 2233 of FIG. 10) so that the first antenna 2231, 2232, 2233 is used (S500).

According to an embodiment, a control method of the electronic device 200 may include a fourth process S400. In the fourth process S400, the processor 120 may compare the angle and spaced distance calculated in the second process S200 with reference values (e.g., B0, D0). The processor 120 may compare an increment S with a predetermined second reference value B0. The processor 120 may compare a spaced distance D between the first conductive portion 223 and the third housing 230 with a third reference value D0. When the increment S is greater than 0 and less than the second reference value B0, the processor 120 may switch the antenna being used (S600). When the increment S is greater than 0 and less than the second reference value B0, the processor 120 may connect the switch 296 to the second conductive portion 233 (S600). When the increment S is greater than 0 and less than the second reference value B0, the processor 120 may release an electrical connection between the switch 296 and the first conductive portion 223 (S600). When the spaced distance D between the first conductive portion 223 and the third housing 230 is less than the third reference value D0, the processor 120 may switch the antenna being used (S600). When the spaced distance D between the first conductive portion 223 and the third housing 230 is less than the third reference value D0, the processor 120 may connect the switch 296 to the second conductive portion 233 (S600). When the spaced distance D between the first conductive portion 223 and the third housing 230 is less than the third reference value D0, the processor 120 may release an electrical connection between the switch 296 and the first conductive portion 223 (S600). When the increment S is greater than the second reference value B0, the processor 120 may maintain use of the first conductive portion 223 (S500). When the spaced distance D between the first conductive portion 223 and the third housing 230 is greater than or equal to the third reference value D0, the processor 120 may maintain use of the first conductive portion 223 (S500).

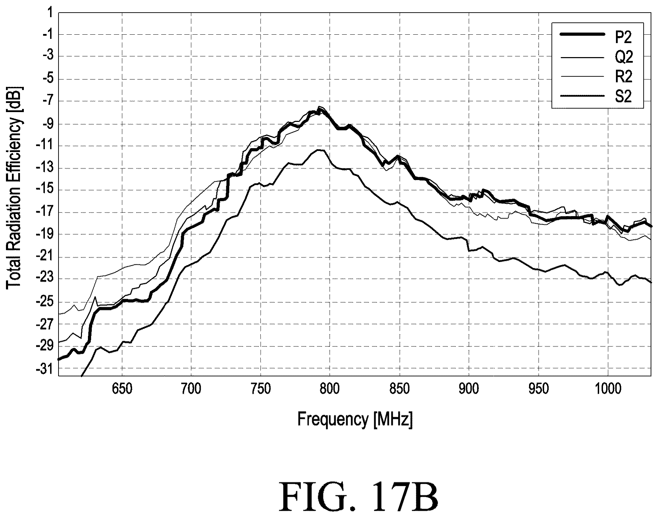

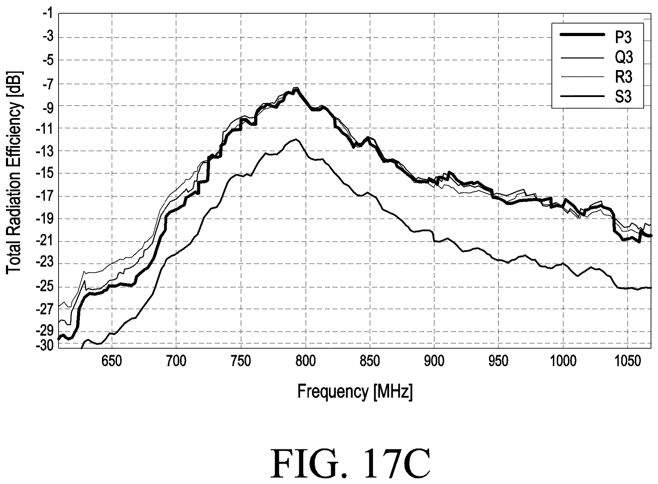

FIG. 17A is a graph comparing antenna performance in the state of FIGS. 11 to 12B. FIG. 17B is a graph comparing antenna performance in the state of FIGS. 13A and 13B. FIG. 17C is a graph comparing antenna performance in the state of FIGS. 14A and 14B. Components described with reference to FIGS. 17A to 17C may be identical in whole or part to the components described with reference to FIGS. 1 to 16.

Referring to FIGS. 17A to 17C, lines P1, P2, and P3 are graphs illustrating antenna performance of the second conductive portion 233 when the housings 210, 220, 230 are fully unfolded (e.g., the state of FIGS. 2 and 3). Lines Q1, Q2, and Q3 are graphs illustrating antenna performance of the first conductive portion 223 when the housings 210, 220, 230 are fully unfolded (e.g., the state of FIGS. 2 and 3). Line R1 is a graph illustrating antenna performance of the first conductive portion 223 in the state of FIGS. 12A and 12B. Line R2 is a graph illustrating antenna performance of the second conductive portion 233 in the state of FIGS. 13A and 13B. Line R3 is a graph illustrating antenna performance of the second conductive portion 233 in the state of FIGS. 14A and 14B. Line S1 is a graph illustrating antenna performance of the first conductive portion 223 in the state of FIGS. 12A and 12B. Line S1 is a graph illustrating antenna performance of the first conductive portion 223 after Current In-Phase tuning in the state of FIGS. 12A and 12B. Line S2 is a graph illustrating antenna performance of the first conductive portion 223 in the state of FIGS. 13A and 13B. Line S3 is a graph illustrating antenna performance of the first conductive portion 223 in the state of FIGS. 14A and 14B.

Referring to FIGS. 17A to 17C, it may be identified that antenna performance of the first conductive portion 223 decreases when the third housing 230 is positioned on a radiating path of the first conductive portion 223. Referring to FIG. 17A, in the form of FIGS. 11 to 12B, antenna performance of the first conductive portion 223 and antenna performance of the second conductive portion 233 are similar, and antenna performance of the first conductive portion 223 may be further enhanced through Current In-phase tuning. Referring to FIGS. 17B to 17C, it may be identified that when the third housing 230 is positioned on a radiating path of the first conductive portion 223, antenna performance of the second conductive portion 233 is higher than antenna performance of the first conductive portion 223. FIGS. 17A to 17C exemplarily show antenna radiation performance in a predetermined frequency band (e.g., 0MHz to 1050MHz). The description of the lines illustrated in FIGS. 17A to 17C (e.g., P1, P2, P3, Q1, Q2, Q3, R1, R2, R3, S1, S2, S3) may be equally applied to a second frequency band (e.g., a frequency band of 1050MHz or higher) other than the first frequency band (e.g., 0MHz to 1050MHz) illustrated in FIGS. 17A to 17C.

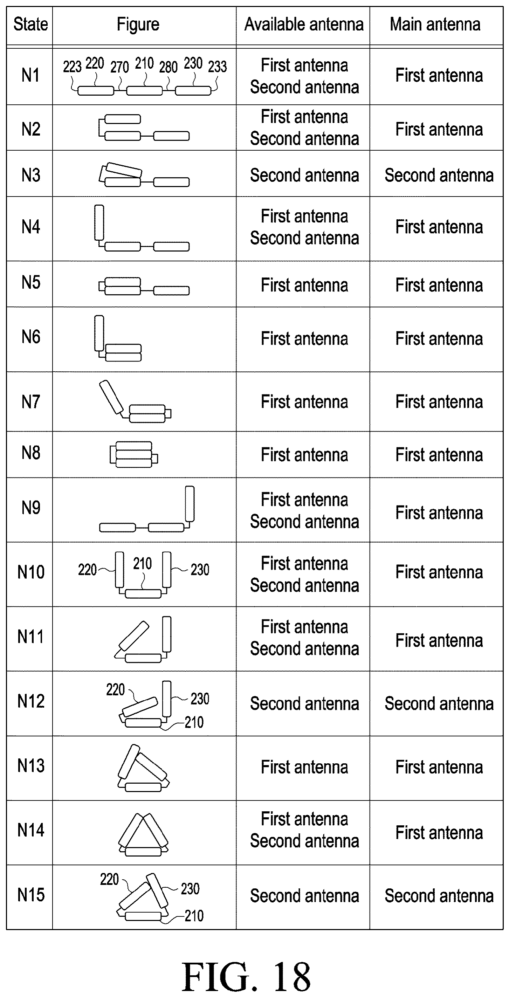

FIG. 18 is a table distinguishing usable antennas (e.g., the first conductive portion 223 or the second conductive portion 233) and actually used main antennas (e.g., the first conductive portion 223 or the second conductive portion 233) according to various operation states of the electronic device 200. The components described with reference to FIG. 18 may be identical in whole or part to the components described with reference to FIGS. 1 to 17C.

Referring to FIG. 18, when the third housing 230 is positioned on a radiating path of the first conductive portion 223, the second conductive portion 233 may be used instead of the first conductive portion 223. When the third housing 230 is not positioned on a radiating path of the first conductive portion 223, the first conductive portion 223 may be used.

In a driving state of the electronic device according to an embodiment (e.g., N1 state of FIG. 18), the third housing 230 may not be positioned on a radiating path of the first conductive portion 223. In the N1 state, the electronic device 200 may use the first antenna 223 or the second antenna 233. In the N1 state, the first antenna 223 may be used preferentially over the second antenna 233.

In a driving state of the electronic device according to an embodiment (e.g., N10 state of FIG. 18), the third housing 230 may not be positioned on a radiating path of the first conductive portion 223. In the N10 state, the electronic device 200 may use the first antenna 223 or the second antenna 233. In the N10 state, the first antenna 223 may be used preferentially over the second antenna 233.

In a driving state of the electronic device according to an embodiment (e.g., N12 state of FIG. 18), the third housing 230 may be positioned on a radiating path of the first conductive portion 223. In the N12 state, the electronic device 200 may use the second antenna 233. In the N12 state, the electronic device 200 may not be able to use the first antenna 223. In the N12 state, the second antenna 233 may be used preferentially over the first antenna 223.

In a driving state of the electronic device according to an embodiment (e.g., N15 state of FIG. 18), the third housing 230 may be positioned on a radiating path of the first conductive portion 223. In the N15 state, the electronic device 200 may use the second antenna 233. In the N15 state, the electronic device 200 may not be able to use the first antenna 223. In the N15 state, the second antenna 233 may be used preferentially over the first antenna 223.

An electronic device may include a flexible display that is partially deformable and a housing that receives the flexible display. An antenna may be disposed at an end portion of the housing, and the antenna may radiate an electromagnetic signal generated inside the electronic device to the outside of the housing. When a metal structure is positioned on a radiating path of the antenna, radiation performance of the antenna may be decreased.

An object of the disclosure may be to increase antenna radiation performance of an electronic device.

An object of the disclosure may be to change an antenna used according to an operation state of an electronic device.

Objects of the disclosure are not limited to the above-mentioned problem and may be variously determined with not departing from the spirit and scope of the disclosure.

An electronic device according to various embodiments of the disclosure may enhance antenna radiation performance of the electronic device by changing an antenna used according to a folded state of the second housing and the third housing.

An electronic device according to various embodiments of the disclosure may reduce a phenomenon in which antenna performance decreases according to an operation state of the electronic device by changing an antenna used according to a folded state of the second housing and the third housing.

Effects obtainable from the disclosure are not limited to the above-mentioned effects, and other effects not mentioned may be apparent to one of ordinary skill in the art from the following description.

According to an embodiment of the disclosure, an electronic device (e.g., 101 of FIGS. 1 to 18) may include a first housing (e.g., 210 of FIGS. 1 to 18) including a first side portion (e.g., 211 of FIGS. 1 to 18) and a second side portion (e.g., 212 of FIGS. 1 to 18) opposite to the first side portion (e.g., 211 of FIGS. 1 to 18).

According to an embodiment of the disclosure, the electronic device (e.g., 101 of FIGS. 1 to 18) may include a first hinge (e.g., 270 of FIGS. 1 to 18) coupled to the first side portion (e.g., 211 of FIGS. 1 to 18) of the first housing (e.g., 210 of FIGS. 1 to 18).

According to an embodiment of the disclosure, the electronic device (e.g., 101 of FIGS. 1 to 18) may include a second hinge (e.g., 280 of FIGS. 1 to 18) coupled to the second side portion (e.g., 212 of FIGS. 1 to 18) of the first housing (e.g., 210 of FIGS. 1 to 18).

According to an embodiment of the disclosure, the electronic device (e.g., 101 of FIGS. 1 to 18) may include a second housing (e.g., 220 of FIGS. 1 to 18) rotatably coupled to the first hinge (e.g., 270 of FIGS. 1 to 18) and including a first conductive portion (e.g., 223 of FIGS. 1 to 18) rotated about the first hinge (e.g., 270 of FIGS. 1 to 18).

According to an embodiment of the disclosure, the electronic device (e.g., 101 of FIGS. 1 to 18) may include a third housing (e.g., 230 of FIGS. 1 to 18) rotatably coupled to the second hinge (e.g., 280 of FIGS. 1 to 18) and including a second conductive portion (e.g., 233 of FIGS. 1 to 18) rotated about the second hinge (e.g., 280 of FIGS. 1 to 18).

According to an embodiment of the disclosure, when the first conductive portion (e.g., 223 of FIGS. 1 to 18) faces the third housing (e.g., 230 of FIGS. 1 to 18), current supply to the first conductive portion (e.g., 223 of FIGS. 1 to 18) may be blocked and a current may be supplied to the second conductive portion (e.g., 233 of FIGS. 1 to 18). For example, when the first conductive portion (e.g., 223 of FIGS. 1 to 18) faces the third housing (e.g., 230 of FIGS. 1 to 18), a current supplied to the first conductive portion (e.g., 223 of FIGS. 1 to 18) may be decreased and a current supplied to the second conductive portion (e.g., 233 of FIGS. 1 to 18) may be increased.

According to an embodiment of the disclosure, a switch (e.g., 296 of FIGS. 1 to 18) may be included that is selectively connected to any one of the first conductive portion (e.g., 223 of FIGS. 1 to 18) and the second conductive portion (e.g., 233 of FIGS. 1 to 18) and selectively supplies a current to any one of the first conductive portion (e.g., 223 of FIGS. 1 to 18) and the second conductive portion (e.g., 233 of FIGS. 1 to 18).

According to an embodiment of the disclosure, the switch (e.g., 296 of FIGS. 1 to 18) may be electrically connected to the second conductive portion (e.g., 233 of FIGS. 1 to 18) when the third housing (e.g., 230 of FIGS. 1 to 18) is positioned on a radiating path of the first conductive portion (e.g., 223 of FIGS. 1 to 18).

According to an embodiment of the disclosure, the switch (e.g., 296 of FIGS. 1 to 18) may be electrically connected to the second conductive portion (e.g., 233 of FIGS. 1 to 18) when a line (e.g., L1 of FIGS. 1 to 18) connecting the first hinge (e.g., 270 of FIGS. 1 to 18) and the first conductive portion (e.g., 223 of FIGS. 1 to 18) intersects with the third housing (e.g., 230 of FIGS. 1 to 18).

According to an embodiment of the disclosure, the switch (e.g., 296 of FIGS. 1 to 18) may be electrically connected to the second conductive portion (e.g., 233 of FIGS. 1 to 18) when an angle (A) formed by the first housing (e.g., 210 of FIGS. 1 to 18) and the second housing (e.g., 220 of FIGS. 1 to 18) is less than a first reference value (A1).

According to an embodiment of the disclosure, the switch (e.g., 296 of FIGS. 1 to 18) may be electrically connected to the first conductive portion (e.g., 223 of FIGS. 1 to 18) when an angle (A) formed by the first housing (e.g., 210 of FIGS. 1 to 18) and the second housing (e.g., 220 of FIGS. 1 to 18) is greater than a first reference value (A1).

According to an embodiment of the disclosure, the first conductive portion (e.g., 223 of FIGS. 1 to 18) may be spaced apart from the third housing (e.g., 230 of FIGS. 1 to 18), and the switch (e.g., 296 of FIGS. 1 to 18) may be selectively connected to the first conductive portion (e.g., 223 of FIGS. 1 to 18) or the second conductive portion (e.g., 233 of FIGS. 1 to 18) according to a spaced distance between the first conductive portion (e.g., 223 of FIGS. 1 to 18) and the third housing (e.g., 230 of FIGS. 1 to 18).

According to an embodiment of the disclosure, the switch (e.g., 296 of FIGS. 1 to 18) may be electrically connected to the second conductive portion (e.g., 233 of FIGS. 1 to 18) when a spaced distance (D) between the first conductive portion (e.g., 223 of FIGS. 1 to 18) and the third housing (e.g., 230 of FIGS. 1 to 18) is less than a third reference value (DO).

According to an embodiment of the disclosure, the switch (e.g., 296 of FIGS. 1 to 18) may be electrically connected to the first conductive portion (e.g., 223 of FIGS. 1 to 18) when a spaced distance (D) between the first conductive portion (e.g., 223 of FIGS. 1 to 18) and the third housing (e.g., 230 of FIGS. 1 to 18) is greater than or equal to a third reference value (D0).

According to an embodiment of the disclosure, the second housing (e.g., 220 of FIGS. 1 to 18) and the third housing (e.g., 230 of FIGS. 1 to 18) may be rotated in opposite directions to each other.

According to an embodiment of the disclosure, the first conductive portion (e.g., 223 of FIGS. 1 to 18) may form a side surface of the second housing (e.g., 220 of FIGS. 1 to 18), and the second conductive portion (e.g., 233 of FIGS. 1 to 18) may form a side surface of the third housing (e.g., 230 of FIGS. 1 to 18).

According to an embodiment of the disclosure, the electronic device (e.g., 101 of FIGS. 1 to 18) may include a first display (e.g., 202 of FIGS. 1 to 18) deformably disposed on one surface of each of the first, second, and third housings (e.g., 210, 220, 230 of FIGS. 1 to 18).

According to an embodiment of the disclosure, the electronic device (e.g., 101 of FIGS. 1 to 18) may include a second display (e.g., 206 of FIGS. 1 to 18) disposed on another surface of the second housing (e.g., 220 of FIGS. 1 to 18) opposite to the one surface on which the first display (e.g., 202 of FIGS. 1 to 18) is disposed.

According to an embodiment of the disclosure, when each of the second housing (e.g., 220 of FIGS. 1 to 18) and the third housing (e.g., 230 of FIGS. 1 to 18) is unfolded with respect to the first housing (e.g., 210 of FIGS. 1 to 18), a current may be supplied to the first conductive portion (e.g., 223 of FIGS. 1 to 18).

According to an embodiment of the disclosure, when the first housing (e.g., 210 of FIGS. 1 to 18), the second housing (e.g., 220 of FIGS. 1 to 18), and the third housing (e.g., 230 of FIGS. 1 to 18) are stacked in a first direction, the second conductive portion (e.g., 233 of FIGS. 1 to 18) may face the first hinge (e.g., 270 of FIGS. 1 to 18).

According to an embodiment of the disclosure, when the first housing (e.g., 210 of FIGS. 1 to 18), the second housing (e.g., 220 of FIGS. 1 to 18), and the third housing (e.g., 230 of FIGS. 1 to 18) are stacked in a first direction, the first conductive portion (e.g., 223 of FIGS. 1 to 18) may be exposed to an outside.

According to an embodiment of the disclosure, the electronic device (e.g., 101 of FIGS. 1 to 18) may include a processor (e.g., 120 of FIGS. 1 to 18).

According to an embodiment of the disclosure, the electronic device (e.g., 101 of FIGS. 1 to 18) may include the switch (e.g., 296 of FIGS. 1 to 18) electrically connected to the processor (e.g., 120 of FIGS. 1 to 18) and selectively connected to the first conductive portion (e.g., 223 of FIGS. 1 to 18) or the second conductive portion (e.g., 233 of FIGS. 1 to 18).

According to an embodiment of the disclosure, the switch (e.g., 296 of FIGS. 1 to 18) may be connected to the second conductive portion (e.g., 233 of FIGS. 1 to 18) when the first conductive portion (e.g., 223 of FIGS. 1 to 18) faces the third housing (e.g., 230 of FIGS. 1 to 18).

According to an embodiment of the disclosure, a processor (e.g., 120 of FIGS. 1 to 18) may connect the switch (e.g., 296 of FIGS. 1 to 18) and the second conductive portion (e.g., 233 of FIGS. 1 to 18) when the first conductive portion (e.g., 223 of FIGS. 1 to 18) faces the third housing (e.g., 230 of FIGS. 1 to 18).

According to an embodiment of the disclosure, the switch (e.g., 296 of FIGS. 1 to 18) may release an electrical connection to the first conductive portion (e.g., 223 of FIGS. 1 to 18) when the first conductive portion (e.g., 223 of FIGS. 1 to 18) faces the third housing (e.g., 230 of FIGS. 1 to 18).

According to an embodiment of the disclosure, a processor (e.g., 120 of FIGS. 1 to 18) may release an electrical connection between the switch (e.g., 296 of FIGS. 1 to 18) and the first conductive portion (e.g., 223 of FIGS. 1 to 18) when the first conductive portion (e.g., 223 of FIGS. 1 to 18) faces the third housing (e.g., 230 of FIGS. 1 to 18).

According to an embodiment of the disclosure, the switch (e.g., 296 of FIGS. 1 to 18) may be connected to the second conductive portion (e.g., 233 of FIGS. 1 to 18) when a spaced distance between the first conductive portion (e.g., 223 of FIGS. 1 to 18) and the third housing (e.g., 230 of FIGS. 1 to 18) is less than a predetermined reference value.

According to an embodiment of the disclosure, a processor (e.g., 120 of FIGS. 1 to 18) may connect the switch (e.g., 296 of FIGS. 1 to 18) and the second conductive portion (e.g., 233 of FIGS. 1 to 18) when a spaced distance between the first conductive portion (e.g., 223 of FIGS. 1 to 18) and the third housing (e.g., 230 of FIGS. 1 to 18) is less than a predetermined reference value.

According to an embodiment of the disclosure, the electronic device (e.g., 101 of FIGS. 1 to 18) may block current supply to the first conductive portion (e.g., 223 of FIGS. 1 to 18) and supply a current to the second conductive portion (e.g., 233 of FIGS. 1 to 18) when an angle (e.g., A of FIGS. 1 to 18) formed by the first housing (e.g., 210 of FIGS. 1 to 18) and the second housing (e.g., 220 of FIGS. 1 to 18) is less than a first reference value (e.g., A1 of FIGS. 1 to 18).

According to an embodiment of the disclosure, the electronic device (e.g., 101 of FIGS. 1 to 18) may include a housing (e.g., 201 of FIGS. 1 to 18) including a first housing (e.g., 210 of FIGS. 1 to 18), a second housing (e.g., 220 of FIGS. 1 to 18) rotatably connected to the first housing (e.g., 210 of FIGS. 1 to 18), and a third housing (e.g., 230 of FIGS. 1 to 18) rotatably connected to the first housing (e.g., 210 of FIGS. 1 to 18).

According to an embodiment of the disclosure, the electronic device (e.g., 101 of FIGS. 1 to 18) may include a first conductive portion (e.g., 223 of FIGS. 1 to 18) forming a first side surface (e.g., 222 of FIGS. 1 to 18) of the housing (e.g., 201 of FIGS. 1 to 18).

According to an embodiment of the disclosure, the electronic device (e.g., 101 of FIGS. 1 to 18) may include a second conductive portion (e.g., 233 of FIGS. 1 to 18) forming a second side surface (e.g., 232 of FIGS. 1 to 18) opposite to the first side surface (e.g., 222 of FIGS. 1 to 18) of the housing (e.g., 201 of FIGS. 1 to 18).

According to an embodiment of the disclosure, the electronic device (e.g., 101 of FIGS. 1 to 18) may include a first hinge (e.g., 270 of FIGS. 1 to 18) rotatably connecting the first housing (e.g., 210 of FIGS. 1 to 18) and the second housing (e.g., 220 of FIGS. 1 to 18).

According to an embodiment of the disclosure, the electronic device (e.g., 101 of FIGS. 1 to 18) may include a second hinge (e.g., 280 of FIGS. 1 to 18) rotatably connecting the first housing (e.g., 210 of FIGS. 1 to 18) and the third housing (e.g., 230 of FIGS. 1 to 18).

According to an embodiment of the disclosure, the electronic device (e.g., 101 of FIGS. 1 to 18) may include a flexible display (e.g., 202 of FIGS. 1 to 18) supported by the first housing (e.g., 210 of FIGS. 1 to 18), the second housing (e.g., 220 of FIGS. 1 to 18), and the third housing (e.g., 230 of FIGS. 1 to 18).

According to an embodiment of the disclosure, the electronic device (e.g., 101 of FIGS. 1 to 18) may include a first sensor (e.g., 297 of FIGS. 1 to 18) for sensing a first angle between the first housing (e.g., 210 of FIGS. 1 to 18) and the second housing (e.g., 220 of FIGS. 1 to 18).

According to an embodiment of the disclosure, the electronic device (e.g., 101 of FIGS. 1 to 18) may include a second sensor (e.g., 298 of FIGS. 1 to 18) for sensing a second angle between the first housing (e.g., 210 of FIGS. 1 to 18) and the third housing (e.g., 230 of FIGS. 1 to 18).

According to an embodiment of the disclosure, the first conductive portion (e.g., 223 of FIGS. 1 to 18) or the second conductive portion (e.g., 233 of FIGS. 1 to 18) may be activated based on the first angle sensed by the first sensor (e.g., 297 of FIGS. 1 to 18) and the second angle sensed by the second sensor (e.g., 298 of FIGS. 1 to 18).

While the disclosure has been shown and described with reference to exemplary embodiments thereof, it will be apparent to those of ordinary skill in the art that various changes in form and detail may be made thereto without departing from the spirit and scope of the present invention as defined by the following claims.

## Claims

1. An electronic device (101; 200) comprising:
a multi foldable housing (201) including a first housing (210), a second housing (220) rotatably connected to the first housing(210) and a third housing(230) rotatably connected to the first housing (210);
a first conductive portion (223) forming a first side surface (222) of the multi foldable housing (201);
a second conductive portion (233) forming a second side surface (232) opposite to the first side surface (222) of the multi foldable housing (201);
a first hinge (270) rotatably connecting the first housing (210) and the second housing (220);
a second hinge (280) rotatably connecting the first housing (210) and the third housing (230);
a flexible display (202) supported by the first housing (210), the second housing (220), and the third housing (230);
a first sensor (297) configured to sense a first angle between the first housing (210) and the second housing (220); and
a second sensor (298) configured to sense a second angle between the first housing (210) and the third housing (230),
wherein the first conductive portion (223) or the second conductive portion (233) is configured to be activated based on the first angle sensed by the first sensor (297) and the second angle sensed by the second sensor (298).

2. The electronic device of claim 1, further comprising
a switch (296) configured to be selectively connected to any one of the first conductive portion(223) and the second conductive portion (233), and configured to selectively supply a current to any one of the first conductive portion (223) and second conductive portion (233).

3. The electronic device of claim 2,
wherein the switch (296) is configured to be electrically connected to the second conductive portion (233) when the third housing (230) is positioned on a radiating path of the first conductive portion (223).

4. The electronic device of claim 2 or 3,
wherein the switch (296) is configured to be electrically connected to the second conductive portion (233) when a line (L1) connecting the first hinge (270) and the first conductive portion (223) intersects with the third housing (230).

5. The electronic device of any one of claims 2 to 4,
wherein the switch (296) is configured to be electrically connected to the second conductive portion (233) when a first angle (A) between the first housing (210) and the second housing (220) is smaller than a first reference value (A1).

6. The electronic device of any one of claims 2 to 5,
wherein the switch (296) is configured to be electrically connected to the first conductive portion (223) when a first angle (A) between the first housing (210) and the second housing (220) is greater than a first reference value (A1).

7. The electronic device of any one of claims 2 to 6,
wherein the first conductive portion (223) is spaced apart from the third housing (230),
and
wherein the switch (296) is configured to be selectively connected to the first conductive portion (223) or the second conductive portion (233) according to a spaced distance between the first conductive portion (223) and the third housing (230).

8. The electronic device of any one of claims 2 to 7,
wherein the switch (296) is configured to be electrically connected to the second conductive portion (233) when a spaced distance (D) between the first conductive portion (223) and the third housing (230) is less than a third reference value (D0).

9. The electronic device of any one of claims 2 to 8,
wherein the switch (296) is configured to be electrically connected to the first conductive portion (223) when a spaced distance (D) between the first conductive portion (223) and the third housing (230) is greater than a third reference value (D0).

10. The electronic device of any one of claims 1 to 9,
wherein the switch (296) is configured to be electrically connected to the first conductive portion (223) when an angle (A) formed by the first housing (210) and the second housing (220) is less than a first reference value (A1) and an angle formed by the first housing (210) and the third housing (230) is greater than a predetermined limit value.

11. The electronic device of any one of claims 1 to 10,
wherein the first conductive portion (223) forms a side surface of the second housing (220) and the second conductive portion (233) forms a side surface of the third housing (230).

12. The electronic device of any one of claims 1 to 11, further comprising:
a first display (202) deformably disposed on one surface of each of the first, second and third housings (210, 220, 230); and
a second display (206) disposed on another surface of the second housing (220) opposite to the one surface on which the first display (202) is disposed.

13. The electronic device of any one of claims 1 to 12,
wherein a current is supplied to the first conductive portion (223) when each of the second housing (220) and the third housing (230) is unfolded with respect to the first housing (210).

14. The electronic device of any one of claims 1 to 13,
wherein the second conductive portion (233) is configured to face the first hinge (270) when the first housing (210), the second housing (220) and the third housing (230) are stacked in a first direction.

15. The electronic device of any one of claims 1 to 14,
wherein the first conductive portion (223) is configured to be exposed to an outside when the first housing (210), the second housing (220) and the third housing (230) are stacked in a first direction.
